# EUROPEAN PATENT SPECIFICATION

(11) **EP 2 110 576 B1**
(45) Date of publication and mention of the grant of the patent: **20.05.2015**
(21) Application number: 09005123.6
(22) Date of filing: 07.04.2009
(51) Int. Cl.: F16F 13/10

(54) **Fluid filled type vibration damping device**
Fluidgefüllte Vibrationsschutzvorrichtung
Dispositif d'amortissement de vibration de type rempli de fluide

(30) Priority: 16.04.2008 JP 2008106535; 24.12.2008 JP 2008328377
(43) Date of publication of application: 21.10.2009
(73) Proprietor: Sumitomo Riko Company Limited, Komaki, Aichi (JP)
(72) Inventor: Ohji, Akira, Komaki-shi Aichi 485-8550 (JP); Tsutsumida, Jyoji, Komaki-shi Aichi 485-8550 (JP)
(74) Representative: Kuhnen & Wacker

(56) References cited:
- EP-A1- 0 262 296
- EP-A2- 0 307 693
- US-A1- 2006 022 110

## Description

### BACKGROUND OF THE INVENTION

### 1. Field of the Invention

The present invention relates in general to a fluid filled type vibration damping device that is adapted to be used in an automotive engine mount or suspension mount for example, and to produce vibration damping effect based on the flow action of a fluid sealed therein. The present invention relates in particular to a fluid filled type vibration damping device furnished with a hydraulic pressure absorbing mechanism for absorbing pressure fluctuations in a pressure-receiving chamber through displacement of a moveable rubber plate in the direction of its thickness.

### 2. Description of the Related Art

Vibration damping devices having a design wherein a first mounting member mounted onto to one component and a second mounting member mounted onto another component are linked to one another by a main rubber elastic body are one means known in the art for providing one component making up a vibration transmission system with vibration damped linkage to or vibration damped support by another component. Fluid filled type vibration damping devices that afford excellent vibration damping action of vibration of particular problematic frequency ranges are also known.

A typical fluid filled type vibration damping device, like the hydraulic damping type rubber mount disclosed in Japanese Patent Republication No. JP-B-6-81972 for example, will have a pressure-receiving chamber (working chamber 5) whose wall is partially defined by a main rubber elastic body (hollow conical elastic element 12); and an equilibrium chamber (auxiliary chamber 6) whose wall is partially defined by a flexible film (bellows 13); a non-compressible fluid fills the pressure-receiving chamber and the equilibrium chamber, and the two chambers communicate with one another through an orifice passage (damping aperture 14). The intended vibration damping effect is produced on the basis of the flow action of fluid that is induced to flow through the orifice passage between the chambers.

However, the vibration damping effect produced by the orifice passage is limited to input of vibration in the specific frequency range to which the orifice passage has been pre-tuned, resulting in the problem of inability to achieve effective vibration damping action of vibration of a frequency range outside the tuning frequency of the orifice passage. In particular, at times of input of vibration in a higher frequency range than the tuning frequency of the orifice passage, the orifice passage may become substantially obstructed due to the anti-resonance effect, making an appreciable decline in vibration damping capacity practically unavoidable.

As one means for addressing this problem, JP-B-6-81972 proposes providing a hydraulic pressure absorbing mechanism that is adapted to absorb pressure fluctuations in the pressure-receiving chamber that may arise at times of input of vibration in a higher frequency range than the tuning frequency of the orifice passage. Specifically, in the fluid filled type vibration damping device taught in JP-B-6-81972, a partition member (bearing base 1) is provided with a moveable member (partition wall 3); and through transmission of hydraulic pressure of the pressure-receiving chamber to the equilibrium chamber side through displacement of the moveable member in the direction of its thickness, a marked drop in vibration damping capacity due to high dynamic spring can be prevented, even in instances where the orifice passage has become obstructed.

However, in the fluid filled type vibration damping device disclosed in JP-B-6-81972, since the moveable member is formed of a rubber elastic body alone, and moreover since large openings are formed to either side of the moveable member in the direction of its thickness, during input of large-amplitude vibration the moveable member will tend to experience a high level of elastic deformation through the openings, creating a risk that it will strike against the rim of the openings and produce noise.

It is known that when a large jarring load is input to a fluid filled type vibration damping device, noise and vibration of magnitude that can cause problems will be produced. Where a fluid filled type vibration damping device is employed as an automotive engine mount for example, noise and vibration sufficient to be perceptible inside the cabin may be produced when the automobile drives over a bump, for example.

Such noise and vibration is thought to be caused by a phenomenon whereby a high level of elastic deformation of the main rubber elastic body due to input of jarring load causes the pressure of the pressure-receiving chamber to drop sharply and suddenly, whereupon bubbles attributed to cavitation form within the pressure-receiving chamber, and the shockwave created when the bubbles disappear produces a water hammer pulse which is transmitted to the vehicle.

The fluid filled type vibration damping device disclosed in JP-B-6-81972 proposes a structure wherein a slit (incision 7) is formed passing through the moveable member in the thickness direction. Specifically, when excessive pressure fluctuations arise in the pressure-receiving chamber, the slit will open up so that the pressure-receiving chamber and the equilibrium chamber communicate with each other through a slit having low flow resistance, thus allowing excessive pressure in the pressure-receiving chamber to escape through the slit and into the equilibrium chamber, preventing cavitation.

However, a problem with such a design furnished with a slit for the purpose of eliminating cavitation noise is that since the slit is induced to open up through elastic deformation of the moveable member, stress will tend to concentrate at the ends of the slit, making the ends of the slit prone to rupture; this will make it difficult for the pressure setting at which the slit opens up to be consistently maintained at its initial value, and to ensure sufficient durability on the part of the moveable member.

Moreover, the fluid filled type vibration damping device disclosed in JP-B-6-81972 proposes a structure wherein a thick-walled section (thick portion 8) is formed surrounding the perimeter of the slit in order to limit the occurrence of and propagation of cracks at the ends of the slit; however, the structure taught in JP-B-6-81972, which is designed with gradually increasing thickness of the section to outside periphery of the section where the slit is formed, does not readily prevent propagation of cracks occurring at the ends of the slit.

Further documents relate to vibration damping devices. As such, document EP 0 307 693 A2 discloses a fluid filled type vibration damping device of a two-chamber engine amounting gare in whose intermediate plate there is a diaphragm of an elastomeric material which is subjected to fluids on both sides and which can move parallel to the direction of induced oscillations. For an improved mobility of this diaphragma and for noise-free stopping in case of oscillatory deflections, the diaphragma has a surrounding cylindrical edge region, and on the upper and lower side of the diaphragma, spherical-segment-shaped knubs are arranged.

Document EP 0 262 296 A1 discloses an hydraulically damping elastic barring having two rigid and walls opposite one another in the actual direction. The elastic barring has at least two chambers located one behind the other and containing a damping fluid, wherein at least one as a circumferential wall designed as an elastic spring element, whereby the chambers are separated from one another by a partition which is at least partially elastic.

Document US 2006/0022110 A1 discloses a hydraulic antivibration device is provided that is capable of reducing greatly strange sound upon inputting of high amplitude while meeting both a low dynamic spring characteristic upon inputting of low amplitude and a high damping characteristic upon inputting of high amplitude. According to the device of the invention, because an elastic partition membrane is arrested by displacement-regulating ribs to regulate its displacement, and openings are pierced to provide an escape for the elastic partition membrane, it is possible to reduce greatly strange sounds upon inputting of large amplitude while meeting both a low dynamic spring characteristic upon inputting of low amplitude and a high damping characteristic upon inputting of large amplitude (intermediate amplitude) vibration.

### SUMMARY OF THE INVENTION

It is therefore one object of this invention to provide a fluid filled type vibration damping device that through provision of a hydraulic pressure absorbing mechanism affords effective vibration damping effect against input vibration over a wide frequency range, and that can effectively prevent noise and vibration caused by cavitation arising during input of a large jarring load, whereby both excellent durability and consistent cavitation-dispelling action can be attained simultaneously, and striking noise caused by striking of the hydraulic pressure absorbing mechanism can be reduced or eliminated.

The above and/or optional objects of this invention may be attained by a fluid filled type vibration damping device according to claim 1, i.e., the invention may be attained according to at least one of the following modes of the invention. The following modes and/or elements employed in each mode of the invention may be adopted at any possible optional combinations. It is to be understood that the principle of the invention is not limited to these modes of the invention and combinations of the technical features, but may otherwise be recognized based on the teachings of the present invention disclosed in the entire specification and drawings or that may be recognized by those skilled in the art in the light of the present disclosure in its entirety.

Specifically, the present invention provides a fluid filled type vibration damping device including a first mounting member and a second mounting member linked by a main rubber elastic body; a pressure-receiving chamber that is situated to one side of a partition member supported by the second mounting member and whose wall is partially defined by the main rubber elastic body, and an equilibrium chamber situated to the other side of the partition member and whose wall is partially defined by a flexible film, the pressure-receiving chamber and the equilibrium chamber being filled with a non-compressible fluid; and an orifice passage through which the pressure-receiving chamber and the equilibrium chamber communicate with one another, the fluid filled type vibration damping device **characterized in that:**
a moveable rubber plate is installed on the partition member; the pressure of the pressure-receiving chamber is directed onto one face of the moveable rubber plate through a pressure-receiving chamber-side opening that is formed in the partition member, while the pressure of the equilibrium chamber is directed onto the other face of the moveable rubber plate through an equilibrium chamber-side opening that is formed in the partition member so as to constitute a hydraulic pressure absorbing mechanism for absorbing pressure fluctuations of the pressure-receiving chamber through displacement of the moveable rubber plate in the thickness direction thereof based on a pressure differential between the pressure-receiving chamber and the equilibrium chamber; a constraining plate larger in size than the opening area of the pressure-receiving chamber-side opening and of the equilibrium chamber-side opening is affixed to the moveable rubber plate, the constraining plate having at least one penetrating window formed therein such that the penetrating window is closed off by the moveable rubber plate; and a slit is formed in the moveable rubber plate in the section thereof that closes off the penetrating window for constituting a short circuiting mechanism such that the slit opens up through elastic deformation of the moveable rubber plate in the section thereof where the slit has been formed, short circuiting the pressure-receiving chamber and the equilibrium chamber.

In the fluid filled type vibration damping device constructed according to the present invention, hydraulic pressure absorbing action to absorb pressure fluctuations in the pressure-receiving chamber will be produced on the basis of minute displacements of the moveable rubber plate in the thickness direction. Thus, during input of vibration of a frequency range outside of the tuning frequency of the orifice passage, vibration damping action can be effectively produced based on hydraulic pressure absorbing action so that the intended vibration damping action can be attained against vibration over a wider frequency range.

In addition, a rigid constraining plate that is larger in diameter than the pressure-receiving chamber-side opening and the equilibrium chamber-side opening which are formed in the partition member is affixed to the moveable rubber plate. Deformation of the moveable rubber plate will thereby be limited by the rigid constraining plate so as to prevent excessive deformation of the moveable rubber plate through the pressure-receiving chamber-side opening or the equilibrium chamber-side opening. Accordingly, it is possible to prevent the moveable rubber plate from striking against the rim of the pressure-receiving chamber-side opening or of the equilibrium chamber-side opening of the partition member due to the excessive deformation, thus effectively preventing troubles such as the occurrence of striking noise etc. In particular, the problem of striking noise is likely to occur in the construction where a slit is formed in the moveable rubber plate, since there is a risk that the moveable rubber plate will appreciably deform partially in the section where the slit has been formed. In the present invention, however, deformation of the entire moveable rubber plate is limited, thereby effectively reducing or preventing the occurrence of striking noise in the section where the slit has been formed.

Furthermore, at times of input of high-frequency small-amplitude vibration, hydraulic pressure absorbing action will be produced through minute displacements of the moveable rubber plate; while at times of input of low-frequency large-amplitude vibration, the moveable rubber plate will be constrained through contact of the constraining plate against the rim of the pressure-receiving chamber-side opening and of the equilibrium chamber-side opening, thus preventing hydraulic pressure of the pressure-receiving chamber from being absorbed through deformation of the moveable rubber plate. For this reason, relative pressure fluctuations of the pressure-receiving chamber and the equilibrium chamber will arise efficiently so as to advantageously ensure a sufficient level of fluid flow through the orifice passage, and vibration damping effect on the basis of the flow action of the fluid will be produced effectively thereby.

Additionally, at least one penetrating window is formed in the constraining plate, the penetrating window is closed off by the constraining plate, and a slit is made in the moveable rubber plate in the section thereof that closes off the penetrating window. Thus, in the event of a sudden extreme rise in negative pressure in the pressure-receiving chamber caused by input of large jarring vibration, this slit will open up through elastic deformation of the moveable rubber plate so that the pressure-receiving chamber and the equilibrium chamber communicate with one another through the slit. Negative pressure in the pressure-receiving chamber can thereby be dispelled as rapidly as possible, making it possible to reduce or eliminate noise and vibration due to cavitation.

Moreover, in the present invention, the slit is made in the section of the constraining plate that closes off the penetrating window, and the perimeter of the slit is surrounded by the constraining plate. For this reason, even if the ends of the slit should experience cracking due to stress concentrations produced by repeated opening and closing of the slit for an extended period, propagation of cracks will be limited by the rigid constraining plate so as to consistently assure cavitation-preventing effect and vibration damping effect against low-frequency large-amplitude vibration.

In addition, the constraining plate will be situated such that, viewed in axial projection (in the thickness direction of the moveable rubber plate), at least a portion thereof will overlap the opening area of the pressure-receiving chamber-side opening and of the equilibrium chamber-side opening, and will be situated straddling the opening areas. In preferred practice, the constraining plate will be arranged overlapping the entire opening area of the pressure-receiving chamber-side opening and the equilibrium chamber-side opening viewed in axial projection.

In the fluid filled type vibration damping device according to the present invention, preferably the outer peripheral edge part of the moveable rubber plate has a large diameter so as to extend to the outer peripheral side beyond the constraining plate; and the outer peripheral edge part of the moveable rubber plate that extends to the outer peripheral side beyond the constraining plate has a corrugated shape extending in the circumferential direction.

Where such a design wherein the outer peripheral edge part of the moveable rubber plate has a corrugated shape extending in the circumferential direction is employed, during displacement of the moveable rubber plate in its thickness direction the outer peripheral edge part of corrugated shape will come into localized contact against the partition member about the circumference. By so doing it will be possible to reduce the level of impact shock at contact as compared with the case where the outer peripheral edge part of the moveable rubber plate comes into contact against the partition member about the entire circumference, so that noise and vibration caused when the moveable rubber plate and the partition member strike each other can be more effectively reduced or eliminated.

In another acceptable mode of the fluid filled type vibration damping device according to the present invention, a peripheral elastic projection that extends in the circumferential direction around the slit formation zone is formed jutting out to at least one side in the thickness direction.

By forming such a peripheral elastic projection surrounding the slit formation area, cracks can be prevented from forming and propagating at the ends of the slit. Moreover if the peripheral elastic projection is positioned so as to come into contact against the partition member during displacement of the moveable rubber plate, cushioned contact of the moveable rubber plate against the partition member can be achieved through elastic deformation of the peripheral elastic projection, affording reduced striking noise.

In yet another acceptable mode of the fluid filled type vibration damping device according to the present invention, a cushioning projection that juts out to either side in the thickness direction is formed in the moveable rubber plate, and the moveable rubber plate comes into contact in the thickness direction with the partition member via the intervening cushioning projection.

Where the moveable rubber plate has a structure furnished with such a cushioning projection, since the moveable rubber plate will come into contact against the partition member via the intervening cushioning projection during minute displacements of the moveable rubber plate, cushioned contact of the moveable rubber plate and the partition member can be achieved on the basis of the elasticity of the cushioning projection, and reduced striking noise can be afforded during contact.

The cushioning projection may be constituted by the peripheral elastic projection, or provided separately from the peripheral elastic projection. Furthermore, the cushioning projection may be employed by itself, without employing the peripheral elastic projection. Also, the cushioning projection may be formed in the section of the moveable rubber plate in which the constraining plate has been anchored, or formed at a location away from the constraining plate. Where the cushioning projection has been formed in the constraining plate anchor section, the cushioning projection will become compressed between the partition member and the constraining plate during displacement of the moveable rubber plate, so as to effectively afford cushioning action and displacement-limiting action through the elasticity of the cushioning projection. On the other hand, where the cushioning projection has been formed at a location away from the constraining plate anchor section, a higher level of cushioning action will be produced through the elasticity of the moveable rubber plate, making it possible to more advantageously achieve the contact noise reduction effect.

In yet another acceptable mode of the fluid filled type vibration damping device according to the present invention, the pressure-receiving chamber-side opening of circular hole shape and the equilibrium chamber-side opening of circular hole shape are formed in the partition member; the moveable rubber plate is of circular plate shape larger in diameter than the pressure-receiving chamber-side opening and the equilibrium chamber-side opening; the constraining plate has circular plate shape larger in diameter than the pressure-receiving chamber-side opening and the equilibrium chamber-side opening and is anchored in the moveable rubber plate; and outer peripheral contact ribs that jut out to either side in the thickness direction and extend in the circumferential direction are formed in the outer peripheral portion of the moveable rubber plate.

Where the pressure-receiving chamber-side opening and the equilibrium chamber-side opening are defined by circular through-holes, and the constraining plate is of circular plate shape larger in diameter than the circular through-holes, the outer peripheral section of the constraining plate will be positioned in stable contact against the partition member about the entire circumference. Accordingly, the moveable rubber plate is able to avoid being subjected to localized striking due to deformation in sections thereof that contact the partition member. Moreover, the outer peripheral contact ribs are formed in the outer peripheral portion of the moveable rubber plate, and the outer peripheral portion of the moveable rubber plate comes into contact against the partition member via the intervening outer peripheral contact rib. Thus, cushioned contact of the moveable rubber plate and the partition member can be achieved on the basis of the elasticity of the outer peripheral contact ribs, so that striking noise can be inhibited.

In yet another acceptable mode of the fluid filled type vibration damping device according to the present invention, the moveable rubber plate is larger in diameter than the constraining plate and the outer peripheral edge part of the moveable rubber plate extends peripherally outward beyond the constraining plate; and the outer peripheral contact ribs are formed on the moveable rubber plate at a location thereof away to the outer peripheral side from the constraining plate.

Where the outer peripheral edge part of the moveable rubber plate extends peripherally outward beyond the constraining plate and the outer peripheral contact ribs are formed jutting out from locations to the outer peripheral side from the constraining plate, not only will cushioning action be afforded through contact via the intervening outer peripheral contact rib, but cushioning action utilizing the elastic force (elastic deformation) of the moveable rubber plate itself will be achieved at the same time. Therefore, the level of impact shock at contact of the moveable rubber plate and the partition member can be suppressed even more effectively.

In yet another acceptable mode of the fluid filled type vibration damping device according to the present invention, the moveable rubber plate has the one slit respectively in each section thereof that closes off the penetrating window.

In yet another acceptable mode of the fluid filled type vibration damping device according to the present invention, ends of the slit extend towards a rim of the penetrating window.

With this arrangement, the progress of cracks at the ends of the slit will be prevented effectively by the constraining plate, whereby durability of the moveable rubber plate can be advantageously attained. In addition, both the intended vibration damping effect and cavitation noise preventing effect will be achieved concurrently with sufficient effectiveness.

In yet another acceptable mode of the fluid filled type vibration damping device according to the present invention, the moveable rubber plate includes at least one contacting projection projecting out from the outer circumferential face thereof.

With this arrangement, in the state where the moveable rubber plate is assembled with the partition member, it is possible to position the moveable rubber plate with respect to the partition member in the axis-perpendicular direction by abutting the contacting projection against the inside face of the housing space of the moveable rubber plate in the partition member. It will be preferable to make the contacting projection contact the partition member with a sufficiently low abutting force so as not to prevent minute displacements of the moveable rubber plate. In addition, whereas the contacting projection may be formed continuously all the way around the circumference of the moveable rubber plate, it will be preferable to form the contacting projections at a plural number of locations along the circumference thereof in order to reduce frictional resistance.

In yet another acceptable mode of the fluid filled type vibration damping device according to the present invention, the constraining plate includes at least one constraining plate positioning portion which specifies circumferential and axis-perpendicular positions of the constraining plate; and the constraining plate positioning portion is used as at least one moveable plate positioning portion which specifies circumferential and axis-perpendicular positions of the moveable rubber plate in the moveable rubber plate.

In the fluid filled type vibration damping device constructed according to the present mode, when the constraining plate is set in the mold for vulcanization molding of the moveable rubber plate in order to form the moveable rubber plate with the constraining plate affixed thereto, it is possible to readily position the constraining plate in the circumferential and axis-perpendicular direction utilizing the constraining plate positioning portion. Accordingly, the penetrating window formed in the constraining plate is positioned in the circumferential and axis-perpendicular directions relative to the mold for vulcanization molding, whereby the section in the moveable rubber plate that closes off the penetrating window will be vulcanization molded to the prescribed shape.

Furthermore, where the constraining plate positioning portion formed in the constraining plate is used as at least one moveable plate positioning portion which positions the moveable rubber plate in the circumferential and axis-perpendicular directions, when the slit is formed by a cutter or the like after vulcanization molding of the moveable rubber plate, the moveable rubber plate is able to be readily positioned in the circumferential and axis-perpendicular directions with respect to the cutter etc., thereby making it possible to form the slit at a prescribed position.

In yet another acceptable mode of the fluid filled type vibration damping device according to the present invention, the constraining plate positioning portion comprises a projection which juts out in the thickness direction of the constraining plate.

Where the constraining plate positioning portion is a projection, even in a thin constraining plate, it is possible to form the constraining plate positioning portion which can exhibit an effective positioning action. Moreover, by providing a positioning target such as a mold for vulcanization molding, a jig, or the like with a recess which corresponds to the projection, the constraining plate is able to be readily positioned in the circumferential and axis-perpendicular directions. Additionally, since the projection can be gripped by hands or the like, it is easy to handle the constraining plate and the moveable rubber plate. Preferably, the constraining plate positioning portion is a projection which juts out to either side of the thickness direction of the constraining plate. More preferably, the projections which have an identical shape with each other are formed jutting out to either side of the thickness direction. With this arrangement, it is possible to effectively achieve the positioning action without checking front/back of the constraining plate, thereby improving operation efficiency.

In yet another acceptable mode of the fluid filled type vibration damping device according to the present invention, in the mode where the constraining plate positioning portion comprises a projection, the projection includes a plurality of ribs extending radially.

With this arrangement, at least a part of the projection includes a plurality of ribs extending radially, making it possible to attain an effective positioning action for the constraining plate in the circumferential direction. Moreover, by forming the ribs so as to extend in specific directions in advance, it is possible to readily check the orientation in the circumferential direction of the constraining plate by visual confirmation.

### BRIEF DESCRIPTION OF THE DRAWINGS

The foregoing and/or other objects, features and advantages of the invention will become more apparent from the following description of a preferred embodiment with reference to the accompanying drawings in which like reference numerals designate like elements and wherein:
FIG. 1 is an elevational view in axial or vertical cross section of a fluid filled type vibration damping device in the form of an engine mount, which is constructed according to a first embodiment of the invention, taken along line 1-1 of FIG. 2;
FIG. 2 is a top plane view of a moveable member of the engine mount of FIG. 1;
FIG. 3 is a bottom plane view of the moveable member of FIG. 2;
FIG. 4 is a cross sectional view taken along line 4-4 of FIG. 2;
FIG. 5 is a top plane view of a partition member of the engine mount of FIG. 1;
FIG. 6 is a bottom plane view of the partition member of FIG. 5;
FIG. 7 is an elevational view in axial or vertical cross section of a fluid filled type vibration damping device in the form of an engine mount, which is constructed according to a second embodiment of the invention;
FIG. 8 is a top plane view of a moveable member of the engine mount of FIG. 7;
FIG. 9 is a cross sectional view taken along line 9-9 of FIG. 8;
FIG.10 is a top plane view of a constraining plate of the moveable member of FIG. 8;
FIG. 11 is a cross sectional view taken along line 11-11 of FIG. 10; and
FIG. 12 is a perspective view showing the moveable member of FIG. 8 set in a slit forming apparatus.

### DETAILED DESCRIPTION OF PREFERRED EMBODIMENTS

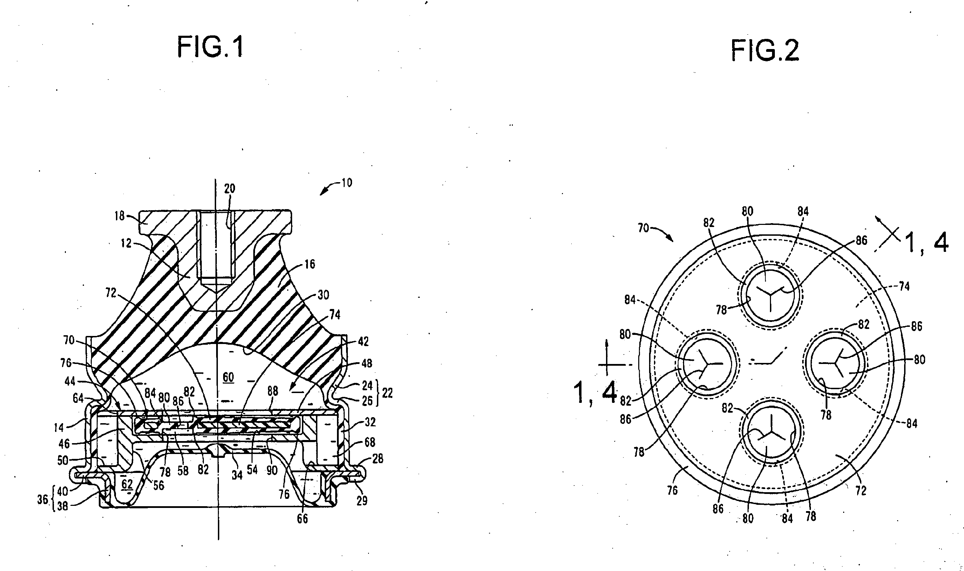

Referring first to FIG. 1, there is depicted an automotive engine mount 10 as a first embodiment of the fluid filled type vibration damping device according to the present invention. This engine mount 10 has a structure in which a first mounting member 12 adapted to be mounted onto one component to be linked in a vibration damped manner, and a second mounting member 14 adapted to be mounted onto the other component to be linked in a vibration damped manner, are elastically linked to one another by a main rubber elastic body 16. Then, the first mounting member 12 is mounted onto the one component to be linked in a vibration damped manner, e.g. the power unit of the automobile, while the second mounting member 14 is mounted onto the other component to be linked in a vibration damped manner, e.g. the body of the automobile, thereby providing vibration damped support of the power unit on the car body. In the description hereinbelow, unless indicated otherwise, the vertical direction refers to the vertical direction in FIG. 1, which coincides with the direction of primary vibration input.

To describe in greater detail, the first mounting member 12 is a highly rigid member made of iron, aluminum alloy or other metal material, and has a generally round block shape. A flange portion 18 that extends diametrically outward is integrally formed at the upper end of the first mounting member 12. Additionally, a bolt hole 20 that is formed opening onto the upper end face of the first mounting member 12 and extending along its center axis; and a female thread is provided on the inside peripheral face of the bolt hole 20. The first mounting member 12 will be attached to the power unit (not shown), for example, by bolting it to the power unit with a mounting bolt (not shown) that is screwed into the bolt hole 20.

The second mounting member 14 is a high-rigidity component made of metal material similar to the first mounting member 12, and has a thin, large-diameter, generally round tube shape overall. A constricted section 22 is provided in the axial medial section of the second mounting member 14. The constricted section 22 includes a tapered portion 24 that gradually decreases in diameter towards the bottom in the axial direction; and a shoulder portion 26 of annular shape that flares towards the outer peripheral side from the lower end of the tapered portion 24. Additionally, a shoulder 28 of annular shape that flares towards the outer peripheral side is formed at the lower end of the second mounting member 14; and a crimping piece 29 of large-diameter tube shape extending downward is integrally formed at the outer peripheral edge of the shoulder 28. This second mounting member 14 will be fastened to the vehicle body, for example, via mounting a bracket (not shown) that has been fastened fitting about the outside of the second mounting member 14 and that is adapted to be mounted on the vehicle body.

The first mounting member 12 and the second mounting member 14 are arranged on the same center axis, with the first mounting member 12 situated spaced apart above the second mounting member 14 in the axial direction. The main rubber elastic body 16 is interposed between the first mounting member 12 and the second mounting member 14 so that the first mounting member 12 and the second mounting member 14 are elastically coupled by the main rubber elastic body 16.

The main rubber elastic body 16 is formed by a rubber elastic body having thick-walled, generally frustoconical shape. A large-diameter circular recess 30 is formed in the diametrical center section of the main rubber elastic body 16, so as to open onto its large-diameter end (the lower end in FIG. 1). The first mounting member 12 is inserted into the small-diameter end of the main rubber elastic body 16; and with the lower face of the flange portion 18 juxtaposed against the axial end face on the small-diameter side of the main rubber elastic body 16 is vulcanization bonded thereto. Meanwhile, the upper portion and the tapered portion 24 of the second mounting member 14 are juxtaposed against and vulcanization bonded to the outer peripheral face of the large-diameter end of the main rubber elastic body 16. The first mounting member 12 and the second mounting member 14 are thereby linked together by the main rubber elastic body 16. The main rubber elastic body 16 according to the present embodiment is provided as an integrally vulcanization molded component that integrally incorporates the first mounting member 12 and the second mounting member 14.

A seal rubber layer 32 that has been integrally formed with the main rubber elastic body 16 is affixed to the inside peripheral face of the second mounting member 14. This seal rubber layer 32 is made of a thin rubber film, and sheathes an area of the second mounting member 14 extending from the inside peripheral of the shoulder portion 26 to the inside peripheral edge of the shoulder 28.

A flexible film.34 is disposed at the lower end opening of the second mounting member 14. The flexible film 34 is made of a rubber film of thin, large-diameter generally circular dome shape and is designed to allow elastic deformation readily. A fastener fitting 36 is affixed to the outer peripheral edge of the flexible film 34. The fastener fitting 36 has generally annular shape, and is integrally provided with an anchor portion 38 of tubular shape and a crimping portion 40 that flares to the outer peripheral side from the upper end of the anchor portion 38. The outer peripheral edge of the flexible film 34 is vulcanization bonded to the anchor portion 38 of the fastener fitting 36, whereby the flexible film 34 takes the form of an integrally vulcanization molded component that integrally incorporates the fastener fitting 36. In the present embodiment, approximately the entire face of fastener fitting 36, excluding the outer peripheral edge and upper end face of the crimping portion 40, are covered by a rubber layer that has been integrally formed with the flexible film 34.

The flexible film 34 described above is attached to the second mounting member 14. Specifically, the outer peripheral edge part of the crimping portion 40 of the fastener fitting 36 is juxtaposed from below against the shoulder 28 that has been provided at the bottom end of the second mounting member 14, and the crimping portion 40 is fastened crimped by the crimping piece 29 that has been integrally formed with the second mounting member 14, thereby fastening the flexible film 34 to the bottom end of the second mounting member 14.

In this way, the flexible film 34 is assembled together with the integrally vulcanization molded component of the main rubber elastic body 16 that incorporates the first mounting member 12 and the second mounting member 14, whereby the opening of the second mounting member 14 on its axial upper end will be blocked off fluidtightly by the main rubber elastic body 16, and the opening of the second mounting member 14 on its axial lower end will be blocked off fluidtightly by the flexible film 34. A fluid filled zone 42 serving as a fluid chamber sealed off from the outside will thereby be formed between the main rubber elastic body 16 and the flexible film 34 in the axial direction to the inside peripheral side of the second mounting member 14.

As the sealed fluid, the fluid filled zone 42 is filled with a non-compressible fluid such as water, an alkylene glycol, a polyalkylene glycol, a silicone oil, a some mixture of these for example. While the sealed fluid is not limited in particular, in order to advantageously achieve vibration damping effect based on the resonance action etc. of the fluid induced to flow through the orifice passage 68 (discussed later), it will be preferable to employ a low-viscosity fluid having viscosity of 0.1 Pa • s or lower. Sealing of the fluid can be accomplished advantageously by carrying out assembly of the flexible film 34 to the second mounting member 14 (the integrally vulcanization molded component of the main rubber elastic body 16 that incorporates the second mounting member 14) while submerged in a non-compressible fluid.

Additionally, a partition member 44 is disposed housed within the fluid filled zone 42. The partition member 44 has a thick, generally circular disk shape, and in the present embodiment includes a partition fitting body 46 and a cover fitting 48.

The partition fitting body 46 has a thick, generally circular disk shape overall, and in the present embodiment is made of metal material such as iron or aluminum alloy. A notched groove 50 is formed on the outer peripheral edge of the partition fitting body 46 so as to open onto its upper end face and outer peripheral face, and extends in the circumferential direction for a prescribed length short of full circle.

A housing recess 54 is formed in the diametrical center section of the partition fitting body 46. The housing recess 54 is formed a prescribed distance away to the inside peripheral side from the notched groove 50 in the partition fitting body 46, and is defined by a circular recess that opens upward. A center recess 56 is also formed in the diametrical center section of the partition fitting body 46. The center recess 56 is a circular recess that is formed at a location corresponding to the housing recess 54 in the partition fitting body 46, and that opens downward in the axial direction.

Meanwhile, the cover fitting 48 presents a thin, generally circular disk shape having approximately identical diameter with the partition fitting body 46, and in the present embodiment is made of metal material comparable to that of the partition fitting body 46. The cover fitting 48 is attached to the partition fitting body 46 by being juxtaposed from above against its upper end to make up the partition member 44 according to the present embodiment.

Through juxtaposition of the cover fitting 48 against the partition fitting body 46 in this way, the upper opening of the notched groove 50 will be covered by the cover fitting 48; and utilizing the notched groove 50, there will be defined a circumferential groove that opens onto the outer peripheral face of the partition member 44 and extends in the circumferential direction. Additionally, covering the opening of the housing recess 54 that has been formed in the partition fitting body 46 with the cover fitting 48 serves to define a housing space 58 that is provided as an installation area inside the partition member 44.

This partition member 44 is arranged housed within the fluid filled zone 42. Specifically, the partition member 44 is slipped into the second mounting member 14 from the bottom opening, and the outer peripheral edge part of the cover fitting 48 is positioned in abutment from below against the shoulder portion 26 of the second mounting member 14, while the crimping portion 40 of the fastener fitting 36 is positioned in abutment from below against the outer peripheral edge part of the partition fitting body 46. The crimping portion 40 of the fastener fitting 36 is then fastened to the second mounting member 14 by the crimping piece 29 of the second mounting member 14, thereby positioning the partition member 44 between the shoulder portion 26 of the second mounting member 14 and the crimping portion 40 of the fastener fitting 36 so as to be fixedly supported by the second mounting member 14. In the present embodiment, with the partition member 44 slipped inside the second mounting member 14, the second mounting member 14 will be subjected to a diameter reduction process such as 360-degree radial compression, whereby the outer peripheral face of the partition member 44 will be disposed in intimate contact against the second mounting member 14 via the intervening seal rubber layer 32.

The partition member 44 is arranged inside the fluid filled zone 42 so as to extend in the axis-perpendicular direction, and is supported by the second mounting member 14 so that the fluid filled zone 42 is divided into two parts in the axial direction to either side of the partition member 44. Specifically, to one side of the partition member 44 (the upper side) there is formed a pressure-receiving chamber 60 whose wall is partially defined by the main rubber elastic body 16 and that gives rise to pressure fluctuations at times of vibration input; and to the other side of the partition member 44 (the lower side) there is formed an equilibrium chamber 62 whose wall is partially defined by the flexible film 34 and that allows volume changes through deformation of the flexible film 34. The non-compressible fluid which has been sealed in the fluid filled zone 42 fills the pressure-receiving chamber 60 and the equilibrium chamber 62.

The outer peripheral opening of the circumferential groove that has been formed on the outer peripheral edge of the partition member 44 will be covered fluidtightly by the second mounting member 14, forming a tunnel-like passage that extends for a prescribed length in the circumferential direction along the outer peripheral edge of the partition member 44. In the cover fitting 48 in a section thereof that corresponds to a first end of the tunnel-like passage there is formed an upper communication passage 64 that passes through the cover fitting 48 in its thickness direction, while at the other end of the tunnel-like passage there is formed a lower communication passage 66 that communicates inwardly in the diametrical direction and downwardly in the axial direction with the lower end of the tunnel-like passage. Thus, the first end of the tunnel-like passage will communicate with the pressure-receiving chamber 60 through the upper communication passage 64, while the other end of the tunnel-like passage will communicate with the equilibrium chamber 62 through the lower communication passage 66; hence, the notched groove 50 formed in the partition fitting body 46 is utilized when defining the orifice passage 68 that connects the pressure-receiving chamber 60 and the equilibrium chamber 62 to one another. In the present embodiment, through appropriate setting of the ratio of passage length and passage cross sectional area of the orifice passage 68 with reference to the wall spring rigidity of the pressure-receiving chamber 60, the resonance frequency of fluid flowing between the two chambers 60, 62 through the orifice passage 68 will be tuned to a low frequency of around 10 Hz corresponding to engine shake of an automobile, etc.

As depicted in FIGS. 2-4, a moveable member 70 is arranged housed within the housing space 58 that has been formed in the partition member 44. The moveable member 70 has a generally round disk shape overall, and is composed of a moveable rubber plate 72 and a constraining plate 74.

The moveable rubber plate 72 is a rubber elastic body having generally round disk shape, and in the present embodiment gradually increases in thickness towards the center side in the diametrical direction. The moveable rubber plate 72 has maximum thickness that is smaller than the inside dimension of the housing space 58 in the vertical direction so that with the moveable member 70 arranged within the housing space 58, a gap will form all the way around between the upper and lower faces of the moveable rubber plate 72 and the upper and lower faces of the housing space 58.

In the present embodiment, the outer peripheral section of the moveable rubber plate 72 is constituted as a rippled portion having undulating shape overall, imparting a pattern of ripples oriented the thickness direction along its circumference. Specifically, while the outer peripheral section of the moveable rubber plate 72 is substantially unchanging in its diametric cross sectional shape and size, its center location in the thickness direction varies so as to deflect up and down along the circumferential direction. In the present embodiment in particular, the centerline and upper and lower faces of the outer peripheral section of the moveable rubber plate 72 have a sinusoidal rippled shape of unchanging periodicity in the circumferential direction, a single period thereof being equivalent to 90 degrees in the circumferential direction, thereby imparting smoothly curving faces overall to the upper and lower faces. With the constraining plate 74 (discussed later) anchored to the moveable rubber plate 72, the rippled portion will be situated to the outer peripheral side of the constraining plate 74 and be formed of the rubber elastic body only.

Furthermore, at the outer peripheral edge of the moveable rubber plate 72 there are integrally formed outer peripheral contact ribs 76 of circular shape extending in the circumferential direction. The outer peripheral contact ribs 76 are formed so as to extend with a generally unchanging semicircular cross section continuously along the outer peripheral edge of the moveable rubber plate 72 about its entire circumference; and a pair of the outer peripheral contact ribs 76 are disposed jutting out to either side in the thickness direction at the outer peripheral edge of the moveable rubber plate 72. In the present embodiment, the outer peripheral contact ribs 76 project as far as a location equal in height in the thickness direction to the diametrical center section of the moveable rubber plate 72, which represents its zone of maximum thickness. With the constraining plate 74 (discussed later) anchored to the moveable rubber plate 72, the outer peripheral contact ribs 76 will extend out to the outer peripheral side beyond the constraining plate 74 so as to be constituted by a rubber-only section.

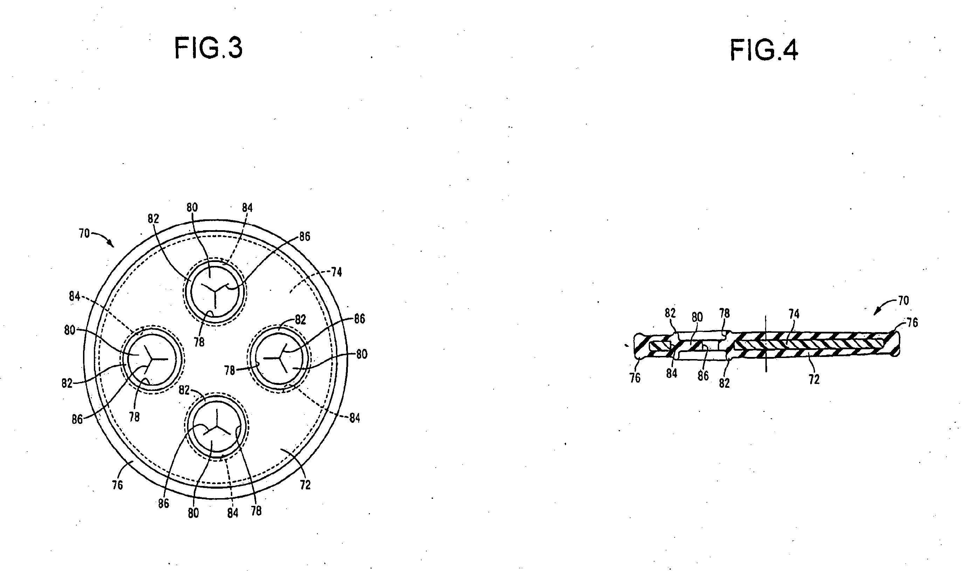

The moveable rubber plate 72 is perforated by a plurality of short circuiting holes 78. The short circuiting holes 78 are small-diameter circular holes that extend in the axial direction, and are formed at several locations along the circumference in the diametric medial section of the moveable rubber plate 72. In the present embodiment in particular, four short circuiting holes 78 have been formed spaced equidistantly apart in the circumferential direction as depicted in FIGS. 2 and 3.

In each of the plurality of short circuiting holes 78 there is respectively formed a rubber film valve 80. The rubber film valve 80 is a rubber elastic body that is thinner in comparison with the moveable rubber plate 72 and constituted so as to extend in the axis-perpendicular direction in the axial center section of the short circuiting hole 78 so that the short circuiting hole 78 is closed off at its lengthwise center section by the rubber film valve 80.

Further, a pair of peripheral elastic projections 82, 82 of annular shape are formed projecting out from the rim of the short circuiting hole 78. The peripheral elastic projections 82 are disposed so as to extend in the circumferential direction and encircle the opening of the short circuiting hole 78, and are formed in a pair projecting out to either side in the thickness direction of the moveable rubber plate 72. The peripheral elastic projections 82 according to the present embodiment have generally semicircular cross section gradually constricting in width in the diametrical direction towards the projecting distal edge. In the present embodiment, the peripheral elastic projections 82 are formed so as to project out to a height to the outside beyond the upper and lower edges of the outer peripheral contact ribs 76 and of the diametrical center section of the moveable rubber plate 72 in the plate thickness direction (vertical direction). Furthermore, the distance in the axial direction separating the projecting distal edge of a peripheral elastic projection 82 which projects to one side in the plate thickness direction from the projecting distal edge of a peripheral elastic projection 82 which projects to the other side in the plate thickness direction will be smaller than the inside dimension of the housing space 58 in the axial direction. Accordingly, with the moveable member 70 installed in the housing space 58 (discussed later) a gap will form between the projecting distal edge of at least one of the pair of peripheral elastic projections 82, 82 and at least one inside face (the upper or lower) of the housing space 58.

The constraining plate 74 is anchored to the moveable rubber plate 72. The constraining plate 74 is made ,of metal material such as iron or aluminum alloy or of a rigid synthetic resin, and has generally round disk shape smaller in diameter than the moveable rubber plate 72. The constraining plate 74 is vulcanization bonded in an embedded state to the center section of the moveable rubber plate 72. In other words, the entire surface of the constraining plate 74 will be covered by the moveable rubber plate 72, and the outer peripheral edge part of the moveable rubber plate 72 will extend to the outer peripheral side of the constraining plate 74. In the present embodiment, the constraining plate 74 is made of rigid synthetic resin with a view to reducing the weight of the moveable member 70 inclusive of the constraining plate 74. In preferred practice the constraining plate 74 will experience substantially no deformation; however, provided that it is more resistant to deformation than the moveable rubber plate 72 and is capable of limiting deformation of the moveable rubber plate 72 when anchored to the moveable rubber plate 72, a modicum of deformation under the action of an outside force is acceptable.

Additionally, penetrating windows 84 are formed in the constraining plate 74. The penetrating windows 84 are circular holes that perforate the constraining plate 74 in the thickness direction; in the present embodiment, four penetrating windows 84 are formed in the diametrical medial section, spaced apart at equidistant intervals in the circumferential direction on a given circle. The penetrating windows 84 are circular holes that are larger in diameter than the short circuiting holes 78 that have been formed in the moveable rubber plate 72, and are formed at locations that, with the constraining plate 74 anchored to the moveable rubber plate 72 (discussed later), correspond to the short circuiting holes 78.

The constraining plate 74 with the above structure is anchored to the moveable rubber plate 72. Specifically, after setting the constraining plate 74 in the cavity of the mold for molding the moveable rubber plate 72, the mold cavity is filled with a rubber material which is subjected to vulcanization molding, to obtain the moveable member 70 of a structure having the constraining plate 74 made of rigid synthetic resin anchored embedded within the moveable rubber plate 72 made of a rubber elastic body. In this embodiment, the moveable member 70 is provided as an integrally vulcanization molded component of the moveable rubber plate 72 incorporating the constraining plate 74.

With the constraining plate 74 anchored to the moveable rubber plate 72 in this way, the penetrating windows 84 that were formed in the constraining plate 74 will be aligned with the short circuiting holes 78 that were formed in the moveable rubber plate 72; and the inside peripheral face of the penetrating windows 84 will be covered by the rubber elastic body of the moveable rubber plate 72, with the short circuiting holes 78 situated to the inside peripheral side of the penetrating windows 84, and with the penetrating windows 84 obstructed by the rubber film valves 80 that have been formed in the axial center part of the short circuiting holes 78. In the present embodiment, the penetrating windows 84 are larger in diameter than the short circuiting holes 78, and the short circuiting holes 78 and the penetrating windows 84 are situated on identical center axes.

At this point, slits 86 are formed in the rubber film valves 80 that obstruct the penetrating windows 84. The slits 86 are constituted as incisions composed of a plurality of linear segments that extend diametrically outward in a radial pattern from the diametrical center part of the rubber film valves 80 and pass through the rubber film valves 80 in the film thickness direction (the axial direction or the vertical direction in FIG. 1). In the present embodiment, as depicted in FIGS. 2 and 3, the slits 86 are composed of three linear incisions spaced apart in the circumferential direction such that the angle formed by any two circumferentially adjacent linear segments among these three will be unchanging; and with one of the three linear segments extending in the diametrical direction of the moveable rubber plate 72. Furthermore, slits 86 will be formed such that the end of each linear segment will not reach the outer peripheral edge of the rubber film valve 80. In the present embodiment, a single slit 86 is formed respectively in each of the rubber film valves 80 that obstruct the penetrating windows 84. Moreover, since the slits 86 have a radial pattern in plan view, every end of the slit 86 extends towards the rim of the penetrating window 84.

Additionally, the slits 86 are designed to be held in the blocked state with the moveable member 70 at rest within the housing space 58; in the present embodiment, the faces situated to either side of each of the linear segments that make up the slits 86 in the rubber film valve 80 will be positioned in contact with one another. It will suffice for the slits 86 to be substantially obstructed when at rest; and with the moveable member 70 installed in the housing space 58, it will suffice for either no fluid flow to take place through the slits 86, or for the amount of such fluid flow to be held to such a small level as to not pose problems in terms of vibration damping capacity. As a specific example, it would be acceptable for the faces to either side of each of the linear segments in the rubber film valve 80 to be separated from each other by a very small gap such that fluid flow to either side of the rubber film valve 80 through the slits 86 will be prevented through the action of flow friction etc., to maintain a substantially blocked state.

Furthermore, under the action of an outside force such as hydraulic pressure, the rubber film valve 80 will experience elastic deformation, causing the slits 86 to open up so that either side of the rubber film valve 80 in its thickness direction now communicate with one another through the slits 86. In the present embodiment, the outer peripheral ends of the slits 86 are situated at diametrical medial locations of the rubber film valve 80; the outer peripheral edge of the thin rubber film valve 80 is situated so as to encircle the slits 86 to their outer peripheral side; and the peripheral elastic projections 82 are formed encircling the slits 86 to their outer peripheral side and spaced apart therefrom by a prescribed distance. Thus, impaired opening of the slits 86 due to the presence of the peripheral elastic projections 82 can be prevented, while the thick peripheral elastic projections 82 will serve to prevent cracks from forming and propagating at the ends of the slits 86.

The moveable member 70 having the structure described above will be arranged within the housing space 58 that has been formed in the interior of the partition member 44. The moveable member 70 has a maximum dimension in its axial direction that is smaller than the inside dimension in the axial direction of the housing space 58, so that a prescribed gap is present in the axial direction between the moveable member 70 and the housing space 58. Thus, the moveable member 70 will be installed in the partition member 44 in a condition allowing it to experience prescribed minute displacements in the axial direction within the housing space 58. In the present embodiment in particular, the outside diameter of the moveable member 70 is smaller than the diametrical inside dimension of the housing space 58 so that gaps are provided between the moveable member 70 and the housing space 58 in the diametrical direction as well, thereby avoiding friction between the outer peripheral face of the moveable member 70 and the inside peripheral face of the housing space 58, so as to efficiently allow minute displacements of the moveable member 70.

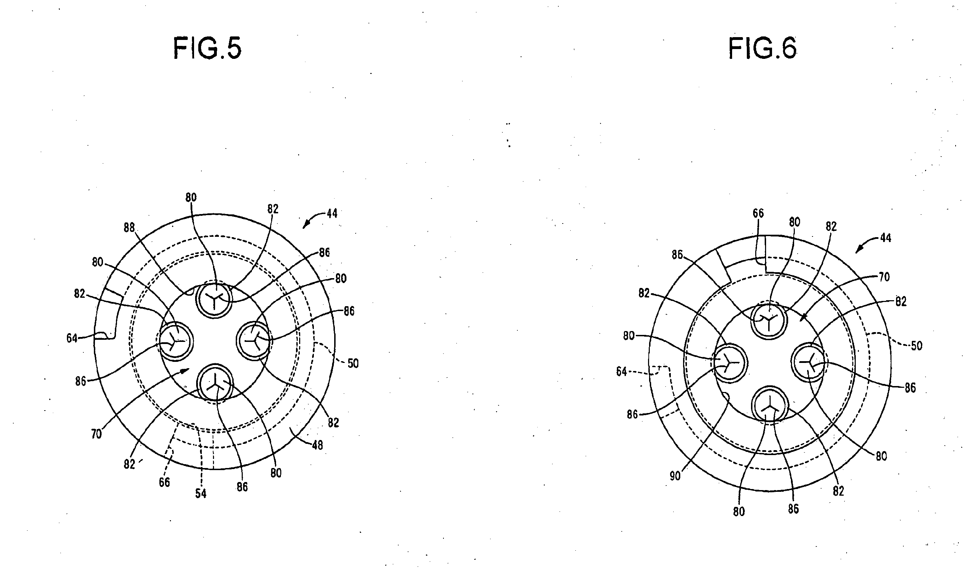

Additionally, a pressure-receiving chamber-side opening 88 is formed passing in the axial direction through the diametrical center section of the cover fitting 48 that constitutes the upper wall of the housing space 58, and the housing space 58 communicates with the pressure-receiving chamber 60 through the pressure-receiving chamber-side opening 88. Meanwhile, an equilibrium chamber-side opening 90 is formed passing in the axial direction through the diametrical center section of the partition fitting body 46 (the base wall of the center recess 56) that constitutes the lower wall of the housing space 58, and the housing space 58 communicates with the equilibrium chamber 62 through the equilibrium chamber-side opening 90. By so doing, pressure of the pressure-receiving chamber 60 will be directed onto one face of the moveable member 70 disposed inside the housing space 58, while pressure of the equilibrium chamber 62 will be directed onto the other face. The moveable member 70 will then experience minute displacements on the basis of a pressure differential between the pressure-receiving chamber 60 and the equilibrium chamber 62. In the present embodiment, as depicted in FIGS. 5 and 6, the pressure-receiving and equilibrium chamber-side openings 88, 90 are large-diameter circular through-holes, with the pressure-receiving chamber-side opening 88 and the equilibrium chamber-side opening 90 being formed with substantially identical diameter.

With the moveable member 70 arranged in this way so as to divide the pressure-receiving chamber 60 and the equilibrium chamber 62 within the housing space 58, when a relative pressure differential arises between the pressure-receiving chamber 60 and the equilibrium chamber 62 in response to input of small-amplitude vibration, the moveable member 70 will experience minute displacements such that pressure fluctuations of the pressure-receiving chamber 60 will be absorbed. That is, the hydraulic pressure absorbing mechanism of the present embodiment is constituted by the moveable member 70 allowed to experience minute displacements in the axial direction.

According to the present embodiment, the outer peripheral edge of the moveable rubber plate 72 extends out to the outer peripheral side beyond the pressure-receiving and equilibrium chamber-side openings 88, 90; the constraining plate 74 which has been anchored to the moveable rubber plate 72 is of circular disk shape larger in diameter than the aperture areas of the pressure-receiving and equilibrium chamber-side openings 88, 90; and the outer peripheral edge of the constraining plate 74 extends about the entire circumference and to the outer peripheral side beyond the pressure-receiving and equilibrium chamber-side openings 88, 90. Thus, during input of large-amplitude vibration, the outer peripheral section of the moveable member 70 to which the constraining plate 74 is anchored will limit displacement of the moveable member 70 in the axial direction through contact against the upper and lower inside faces of the housing space 58.

In the event that a very large pressure differential arises between the pressure-receiving chamber 60 and the equilibrium chamber 62, the slits 86 will open up due to elastic deformation of the rubber film valves 80, and the pressure-receiving chamber 60 and the equilibrium chamber 62 will communicate with each other through the slits 86. There is thereby constituted a short circuiting mechanism that, at times of input of large jarring load, will place the pressure-receiving chamber 60 and the equilibrium chamber 62 in communication with each other with lower flow resistance than through the orifice passage 68. That is, in the present embodiment, the elastic force of the rubber film valves 80 is utilized in devising a valve for switching the slits 86 between the communicating state and the blocked state.

When vibration of a low-frequency range corresponding to engine shake is input to the engine mount 10 having the above construction and installed in a vehicle, fluid flow will be produced through the orifice passage 68 which has been tuned to a low-frequency range, and vibration damping effect (high damping effect) will be effectively produced based on flow action, e.g. the resonance action, of the fluid.

Because vibration of a low-frequency range corresponding to engine shake has amplitude greater than the allowable level of deformation of the moveable member 70, the outer peripheral section of the moveable member 70 will strike against the upper and lower inside faces of the housing space 58 so that the moveable member 70 is substantially constrained, thus preventing hydraulic pressure-absorbing action that would result from minute displacements of the moveable member 70. Additionally, during input of vibration of the low-frequency range corresponding to ordinary engine shake, elastic deformation of the rubber film valves 80 will be inhibited, and the slits 86 will be maintained in the closed state. Consequently, hydraulic pressure of the pressure-receiving chamber 60 can be efficiently maintained without escaping to the equilibrium chamber 62 so that fluid flow through the orifice passage 68 may be advantageously produced on the basis of a pressure differential between the pressure-receiving chamber 60 and the equilibrium chamber 62. As a result, the engine mount 10 having a design provided with such a hydraulic pressure-absorbing mechanism will be able to exhibit effective vibration damping capacity in response to input of vibration in a low-frequency range.

If large-amplitude vibration such as shake during normal driving or shake when driving over a bump is input, the outer peripheral section of the moveable member 70, which is composed of rubber only and which has rippled shape, will become pressed against either the upper or lower inside wall of the housing space 58. Thus, cushioning action will be produced on the basis of the damping effect etc. resulting from elastic deformation of the outer peripheral section of the moveable member 70; and striking noise etc. due to contact of the moveable member 70 with the partition member 44 can be prevented.

Additionally, when mid- to high-frequency, small-amplitude vibration corresponding to idling vibration or driving rumble is input to the engine mount 10 having the above construction and installed in a vehicle, at times of input of vibration in the mid- to high-frequency range, the orifice passage 68 will become substantially blocked through the anti-resonance effect, while the moveable member 70 will experience minute displacements in the axial direction on the basis of a relative pressure differential between the pressure-receiving chamber 60 and the equilibrium chamber 62. These minute displacements of the moveable member 70 will produce hydraulic pressure-absorbing action whereby pressure fluctuations arising in the pressure-receiving chamber 60 will escape to the equilibrium chamber 62 and be absorbed, so that the intended vibration damping effect (low dynamic spring effect) may be produced effectively. During input of vibration of a mid- to high-frequency range corresponding to idling vibration or driving rumble as well, elastic deformation of the rubber film valves 80 will be inhibited, and the slits 86 will be maintained in the closed state.

The tuning of the frequency range at which hydraulic pressure-absorbing action will be manifested through minute displacements of the moveable member 70 can be set, for example, through appropriate adjustment of the gaps between the moveable member 70 and the upper and lower inside faces of the housing space 58, in other words, of the stroke (allowable displacement) of the moveable member 70 in the axial direction.

If a large jarring load such as could result from driving over a bump is input to the engine mount 10 installed in a vehicle and a very high level of negative pressure arises in the pressure-receiving chamber 60 as a result, the rubber film valves 80 will experience appreciable deformation on the basis of the pressure differential between the pressure-receiving chamber 60 and the equilibrium chamber 62, causing the slits 86 to open up. The pressure-receiving chamber 60 and the equilibrium chamber 62 will then communicate with each other through the slits 86, and fluid will inflow to the pressure-receiving chamber 60 from the equilibrium chamber 62 through the slits 86 so that the negative pressure in the pressure-receiving chamber 60 may be dispelled as rapidly as possible.

The rubber film valves 80 in which the slits 86 have been made are situated to the inside peripheral side of the penetrating windows 84 which have been formed in the constraining plate 74 made of rigid synthetic resin. For this reason, deformation of the rubber film valves 80 will be limited by the constraining plate 74, thus preventing the slits 86 from opening up more than necessary. It will be possible thereby to prevent cracks from forming in the rubber film valves 80 due to stress concentrations at the ends of the slits 86 due to repeated opening and closing.

In particular, the relatively small-diameter penetrating windows 84 have been formed at multiple locations in the constraining plate 74, and a single slit 86 has been formed respectively in each of the rubber film valves 80 fashioned so as to obstruct the plurality of penetrating windows 84. As a result, the free length of the rubber film valves 80 fashioned so as to obstruct the penetrating windows 84 can be kept small so as to limit the extent of deformation of the rubber film valves 80, thereby preventing cracks from occurring due to excessive stress concentrations at the ends of the slits 86, as well as preventing the occurrence of striking noise caused by abutment of the rubber film valves 80. Furthermore, a sufficient total opening area of the slits 86 is ensured, thereby effectively affording the effect of dispelling negative pressure of the pressure-receiving chamber 60.

Furthermore, in the event that any cracks do occur at the ends of the slits 86, the cracks will be prevented from propagating by the constraining plate 74, so as to avoid problems such as diminished vibration damping capacity due to the slits 86 becoming more prone to open through crack propagation, or to rupture of moveable rubber plate 72 due to crack propagation. Moreover, in the present embodiment, the peripheral elastic projections 82 have been fashioned so as to encircle the rubber film valves 80 to the outer peripheral side, and the moveable rubber plate 72 is particularly thick to the outer peripheral side adjacent to the rubber film valves 80. Crack propagation can be more effectively prevented thereby. In the present embodiment in particular, the thin rubber film valves 80 and the thick moveable rubber plate 72 are integrally formed so as to create at their boundaries shoulders of tubular shape that extend in the axial direction, and these shoulders have the effect of arresting any cracks that may have occurred at the ends of the slits 86.

Additionally, the slits 86 have a radial pattern and the ends of the slits 86 extend towards the rim of the penetrating windows 84. Consequently, in the event that any cracks do occur at the ends of the slits 86, the progress of the cracks will be prevented effectively by the constraining plate 74, whereby durability of the moveable member 70 as well as both effective exhibition of the intended vibration damping effect and cavitation noise reducing effect is able to be advantageously realized.

Furthermore, the moveable member 70 has a construction in which the constraining plate 74 is anchored to the moveable rubber plate 72 fashioned from a rubber elastomer, and the constraining plate 74 is larger in diameter than the pressure-receiving and equilibrium chamber-side openings 88, 90 which have been formed in the partition member 44. Thus, in the event that the moveable member 70 is suctioned towards the pressure-receiving chamber 60 side under considerable force due to input of a large jarring load, the constraining plate 74 will prevent the moveable member 70 from experiencing major deformation towards the pressure-receiving chamber 60 side through the pressure-receiving chamber-side opening 88, thus effectively preventing damage to the moveable member 70 resulting from the moveable member 70 being pushed forcefully against the rim part of the pressure-receiving chamber-side opening 88.

Additionally, by limiting or inhibiting deformation of the moveable member 70 through the constraining plate 74, it will be possible to prevent major displacement of the moveable member 70 resulting from the moveable member 70 being drawn towards either the pressure-receiving chamber 60 or the equilibrium chamber 62 side through the pressure-receiving or equilibrium chamber-side opening 88, 90, and to reduce the force with which the moveable member 70 strikes the rim part of the pressure-receiving chamber-side opening 88 and the equilibrium chamber-side opening 90. For this reason, the noise occurring when the moveable member 70 strikes the partition member 44 can be reduced.

In the present embodiment, sections situated to the diametrical outer side of the moveable rubber plate 72 along the circumference of the peripheral elastic projections 82 which have been formed at the rims of the short circuiting holes 78 will be situated to the outer peripheral side of the rims of the pressure-receiving and equilibrium chamber-side openings 88, 90 in the diametrical direction. Also, portions along the circumference of the peripheral elastic projections 82 are positioned between the axially opposed faces of the upper and lower walls of the housing space 58, and during minute displacements of the moveable member 70, these peripheral elastic projections 82 will serve as the initial point of contact against the upper and lower walls of the housing space 58. Thus, contact between the moveable member 70 and the walls of the housing space 58 will take place in cushioned fashion, and noise at contact can be reduced or eliminated. In this way, in the present embodiment, portions of the peripheral elastic projections 82 will be utilized in making up the cushioning projections that jut out to either side in the thickness direction.

Moreover, in the present embodiment, the outer peripheral contact ribs 76 which have been formed at the outer peripheral edge of the moveable rubber plate 72 jut out to either side in the thickness direction, and contact between the moveable rubber plate 72 and the upper and lower inside faces of the housing space 58 will take place in cushioned fashion due to the elasticity of these outer peripheral contact ribs 76. Further, the projecting distal edges of the outer peripheral contact ribs 76 are situated inward in the thickness direction from the projecting distal edges of the peripheral elastic projections 82; and the locations of the projecting distal edges of the peripheral elastic projections 82 and the projecting distal edges of the outer peripheral contact ribs 76 are staggered in the axial direction. Thus, the peripheral elastic projections 82 and the outer peripheral contact ribs 76 will come into stepwise contact against the upper and lower inside faces of the housing space 58 so that their cushioning action will take place in multistep fashion upon contact. Thus, cushioning effect can be more effectively obtained upon contact of the moveable rubber plate 72 and the partition member 44, and it will be possible to advantageously prevent noise etc. produced by contact.

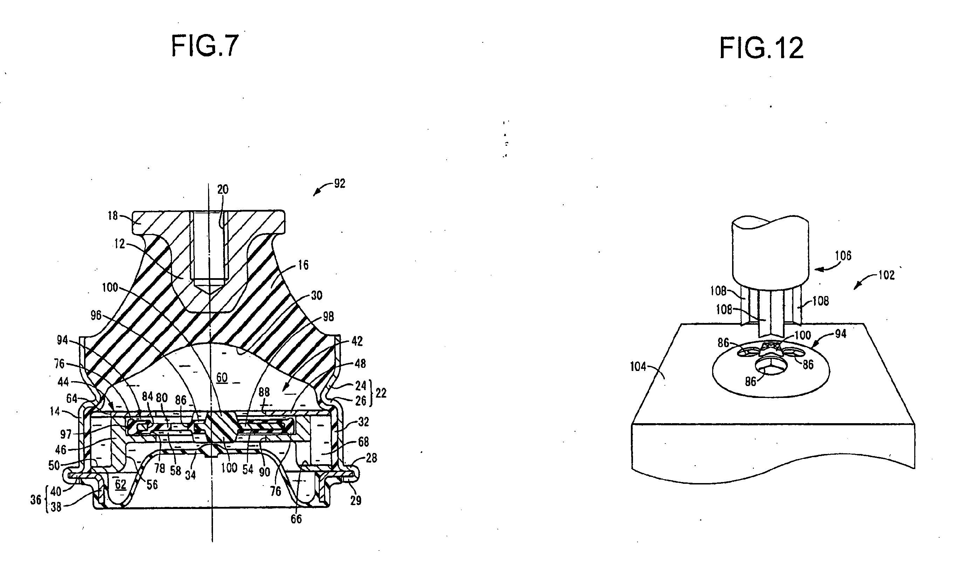

Referring next to FIG. 7, there is depicted an automotive engine mount 92 as a second embodiment of the fluid filled type vibration damping device according to the present invention. In this engine mount 92, a moveable member 94 is housed within the housing space 58 provided to the partition member 44. In the description following, elements like those in the first embodiment shall be designated by like reference numerals and will not be discussed in detail.

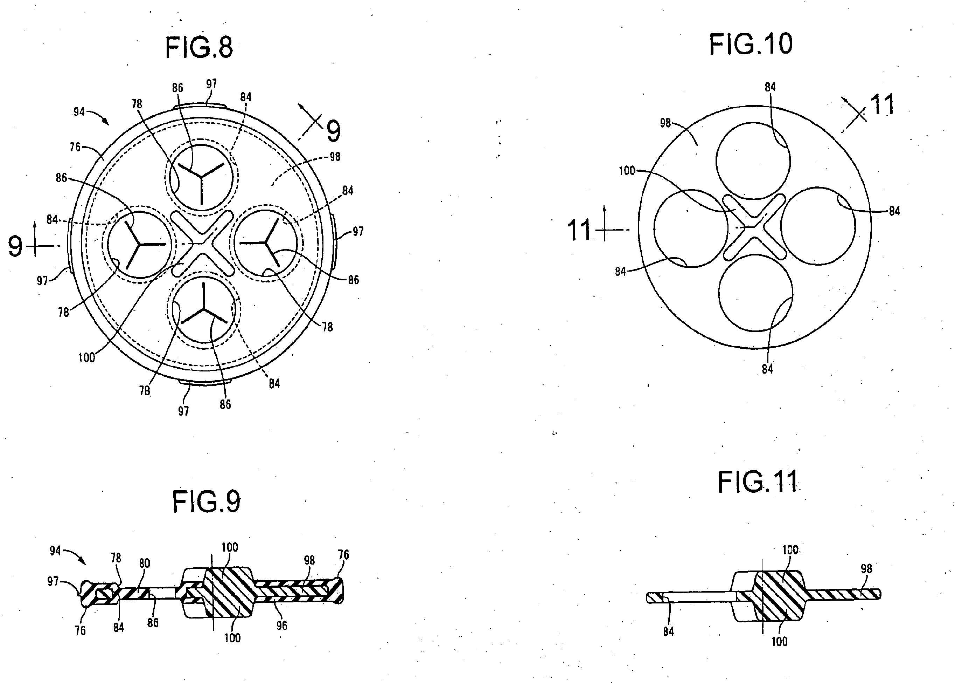

Described in detail, as depicted in FIGS. 8 and 9, the moveable member 94 includes a moveable rubber plate 96 and a constraining plate 98. The moveable rubber plate 96 is formed using a rubber elastic body having generally round disk shape. In the present embodiment, the constraining plate 98 is made of rigid synthetic resin. However, the constraining plate 98 may alternatively be made of metal material such as iron or aluminum alloy.

Contacting projections 97 are integrally formed with the moveable rubber plate 96 and project outwardly from its outer circumferential face in the diametrical direction. The contacting projection 97 has a sufficiently smaller dimension in the thickness direction than the moveable rubber plate 96 and extends for a prescribed length in the circumferential direction. In the present embodiment, two pairs of contacting projections 97 are formed such that the contacting projections 97 in each pair are diametrically opposed to each other, and that opposing directions of the contacting projections 97 in the two pairs are orthogonal to one another. Additionally, a radial distance between projecting distal end faces of the pair of the contacting projections 97 diametrically opposed to each other is equal to or slightly greater than the inside dimension in the diametrical direction of the housing space 58 formed in the partition member 44. With the moveable member 94 disposed within the housing space 58, the contacting projections 97 come into contact against the inside peripheral wall face of the housing space 58 so that the moveable member 94 will be positioned in the axis-perpendicular direction with respect to the partition member 44.

In the present embodiment, the moveable rubber plate 96 has a structure that eliminates the peripheral elastic projections 82 formed around the short circuiting holes 78 in the preceding first embodiment. Moreover, the moveable rubber plate 96 in this embodiment has a multitude of minute projections formed over an annular zone at the inner circumferential side of the outer peripheral contact ribs 76, so that the two sides of the moveable rubber plate 96 have rough surfaces of grained pattern over the aforementioned zone.

The constraining plate 98 is anchored to the moveable rubber plate 96. As depicted in FIGS. 10 and 11, the constraining plate 98 has a generally round disk shape overall, and a positioning projection 100 serving as a constraining plate positioning portion is formed in the diametrical center section thereof. The positioning projection 100 is composed of four ribs extending radially that provides a crisscross shape overall as will be apparent from FIG. 10. The each rib which composes the positioning projection 100 constricts in width towards its projecting distal end and is disposed so as to extend between circumferentially adjacent ones of the penetrating windows 84. In the present embodiment, two positioning projections 100 which have an identical shape with each other are formed jutting out to either side in the thickness direction of the constraining plate 98.

The constraining plate 98 with the above structure is disposed and anchored to the center section in the thickness direction of the moveable rubber plate 96, thereby constituting the moveable member 94 according to the present embodiment. In the moveable member 94, the entire portion of the constraining plate 98 situated away from the positioning projections 100 is anchored to the moveable rubber plate 96 in the embedded state. In other words, at the diametrical center section of the moveable rubber plate 96, the positioning projections 100 of the constraining plate 98 jut out from the moveable rubber plate 96 in the thickness direction and are exposed to the outside. Where the positioning projections 100 of the constraining plate 98 are exposed to the outside in this way, moveable plate positioning portions which position the moveable member 94 in the circumferential and axis-perpendicular directions are defined by the positioning projections 100 per se.

The moveable member 94 is formed by means of setting the constraining plate 98 in the mold for vulcanization molding of the moveable rubber plate 96 and filling the cavity of the mold for vulcanization molding with a rubber material which is subjected to vulcanization molding. At this point, the constraining plate 98 will be positioned by the positioning projections 100 with respect to the mold for vulcanization molding in the circumferential and axis-perpendicular directions. Accordingly, it is possible to position and form the rubber film valves 80 of prescribed shape in the penetrating windows 84 of the constraining plate 98.

After the vulcanization molding of the moveable rubber plate 96, the slits 86 will be formed in the rubber film valves 80 utilizing a slit forming apparatus 102 like that depicted in FIG. 12. The slit forming apparatus 102, whose structure is not limited in particular, includes a support table 104 and a cutter 106, for example. The support table 104 has a flat plate configuration and one or several hollows having a shape which corresponds to the moveable member 94 are formed opening onto the top surface thereof. The cutter 106 is disposed above the support table 104 with a space therebetween and has a plurality of cutting edges 108 extending downward and each having a shape which corresponds to the shape of the slit 86. Moreover, while not always clear from the drawing, each cutting edge 108 has its basal end supported by a support portion whose shape corresponds to each short circuiting hole 78 in transverse cross section.

The moveable member 94 prior to being provided with the slits 86 is set with respect to the hollow formed onto the support table 104 of the slit forming apparatus 102. At this point, the bottom wall of the hollow has a recess which corresponds to the positioning projection 100 provided as the positioning portion of the moveable member 94. By means of fitting the moveable member 94 into the hollow, the moveable member 94 will be positioned with respect to the slit forming apparatus 102 in the circumferential and axis-perpendicular directions. While the drawing shows a structure where a single hollow is formed with respect to a single support table 104 and a single cutter 106 is disposed, it would also be acceptable to form a plurality of hollows with respect to the single support table 104 and dispose a plurality of cutters 106 at positions corresponding to those plurality of hollows respectively.

After setting the moveable member 94 onto the support table 104, the cutter 106 will displace so as to be close to the support table 104 and the moveable member 94. At this point, since the moveable member 94 is positioned with respect to the slit forming apparatus 102, the each cutting edge 108 of the cutter 106 will be aligned with the corresponding rubber film valve 80 formed in the short circuiting hole 78, thereby penetrating the rubber film valve 80 in the thickness direction. In this way, the slit 86 of prescribed shape is formed in the each rubber film valve 80, thereby obtaining the moveable member 94 provided with the slits 86.

In the automotive engine mount 92 of this construction according to the present embodiment, the positioning projections 100 are provided to the constraining plate 98, making it possible to readily position the constraining plate 98 with respect to the mold for vulcanization molding of the moveable rubber plate 96 in the circumferential and axis-perpendicular directions. Therefore, it is possible to mold the moveable rubber plate 96 while being positioned in the prescribed position in the circumferential and axis-perpendicular directions with respect to the constraining plate 98 having the short circuiting holes 78 formed at a plurality of circumferential locations thereof.

Also, the positioning projections 100 provided to the constraining plate 98 jut out from the moveable rubber plate 96 in the thickness direction and are exposed to the outside, whereby the positioning portion of the moveable rubber plate 96 is defined by the positioning projections 100. With this arrangement, the moveable member 94 will be set positioned in the circumferential and axis-perpendicular directions with respect to the slit forming apparatus 102, thereby making it possible to reliably and easily form the slits 86 using the slit forming apparatus 102.

Furthermore, since the positioning portion is defined by the positioning projections 100 jutting out in the thickness direction, it is possible to grip the positioning projection 100 by hands, tools or the like. Accordingly, it is easy to handle the constraining plate 98 and the moveable member 94, whereby operations during fabrication will become simple. As a specific example, after the slits 86 are formed, it is possible to grip the positioning projection 100 and remove the moveable member 94 from the hollow of the support table 104.

In addition, in the present embodiment, the positioning projection 100 is defined by a combination of a plurality of ribs extending in the diametrical directions which are generally orthogonal to one another. Therefore, positioning action in the circumferential direction is able to exhibit more effectively. Furthermore, since the positioning projection 100 has a cross configuration in plan view, it is easy for operators to grip the positioning projection 100 by their hands, thereby making it much easier to handle the constraining plate 98 and the moveable member 94.

Moreover, in the present embodiment, the positioning projection 100 is formed jutting out to either side in the thickness direction of the constraining plate 98 while the two positioning projections 100 jutting out to either side in the thickness direction have an identical shape with each other. With this arrangement, the front and back faces of the constraining plate 98 have an identical shape with each other, thereby making it easier to fabricate it without the need of checking front/back of the constraining plate 98.

While the present invention has been shown hereinabove in terms of a number of preferred embodiments, these are merely illustrative and should in no wise be construed as limiting the invention to the specific disclosure in the embodiments.

For example, in the first and second embodiments above, slits 86 of a radial pattern composed of linear incisions extending in three directions are shown by way of example, but no particular limitation is imposed as to the specific shape of the slits 86. As a specific example, the slits could be fashioned from a single incision only, or fashioned from a combination of several incisions. Where the slits are fashioned from a combination of several incisions, the several incisions may be combined in a radial pattern; combined so as to intersect one another; or formed independently spaced apart from one another. The incisions which make up the slits may in their lengthwise direction or the penetration direction (i.e. the thickness direction of the moveable rubber plate) extend in linear fashion; have curving shape overall; or have localized curved or bending segments. The ease with which slits will open up can be adjusted by forming tapering projections at both ends of the slits.

While the preceding first and second embodiments show a construction wherein the constraining plate 74(98) is smaller in diameter than the moveable rubber plate 72(96) so that the outside peripheral edge part of the moveable rubber plate 72(96) extends to the outside peripheral side beyond the constraining plate 74(98) about the entire circumference, the constraining plate could instead be identical in outside diameter to the moveable rubber plate so as to lie exposed to the outside at the outside peripheral face of the moveable rubber plate; or larger in diameter than the moveable rubber plate so that its outside peripheral edge part extends diametrically outward beyond the moveable rubber plate, for example.

Also, while the preceding first and second embodiments show a construction wherein a plurality of penetrating windows 84 are made in the constraining plate 74(98), it will not always be necessary to form a plurality of penetrating windows, and a structure having a single penetrating window would be acceptable as well. Further, while in the preceding first and second embodiments the inside peripheral face of the penetrating window 84 is situated away to the outside peripheral side from the ends of the slits 86, the slits could instead be fashioned so that the ends of the slits extend up to the inside peripheral face of the penetrating window for example, thereby effectively preventing cracks from occurring at the ends of the slits as well.

Moreover, while in the preceding first embodiment the peripheral elastic projections 82 are fashioned so as to encircle the rubber film valve 80 to its outside peripheral side, the peripheral elastic projections may instead be formed in those sections of the moveable rubber plate that obstruct the penetrating windows (in the preceding first embodiment, the rubber film valves 80). Where the peripheral elastic projections are formed in sections that obstruct the penetrating windows, the peripheral elastic projections need not come into contact with the partition member.

Also, while in the preceding first embodiment the peripheral elastic projections 82 come into partial contact against the partition member 44, and these contacting portions make up cushioning projections that provide cushioning action, there is no need for the cushioning projections to double as the peripheral elastic projections, and could instead be fashioned separately from the peripheral elastic projections. Where the cushioning projections are provided separately from the peripheral elastic projections, it will not be necessary for the cushioning projections to have annular shape, and they could instead be composed of a multitude of independent projections, a grained pattern, or linear shapes (ribs) extending in an appropriate pattern.

Moreover, while in the preceding first embodiment the peripheral elastic projections 82 are formed in a rubber-only section away from the constraining plate 74 to the inside peripheral side of the penetrating windows 84, the cushioning projections could instead be formed in the area of the moveable rubber plate in which the constraining plate has been anchored.

In the first preceding embodiment, the outer peripheral contact ribs 76 and the peripheral elastic projections 82 are urged into contact against the partition member 44 through minute displacements of the moveable member 70 in the thickness direction; however, it would be acceptable for the outer peripheral contact ribs, the peripheral elastic projections, and the cushioning projections to be either spaced apart from the partition member or positioned in contact against the partition member, while at rest. Further, where the outer peripheral contact ribs, the peripheral elastic projections, and the cushioning projections have been pre-positioned in contact against the partition member, the outer peripheral contact ribs, the peripheral elastic projections, and the cushioning projections may be pressed against the partition member and thereby pre-compressed in the direction of projection.

Moreover, while in the preceding first and second embodiments the pressure-receiving chamber-side opening 88 and the equilibrium chamber-side opening 90 take the form of large-diameter circular through-holes that pass through the diametrical center section of the partition member 44, the pressure-receiving chamber-side opening and the equilibrium chamber-side opening could instead be composed of a multitude of small-diameter holes for example, thus imparting the partition member with a mesh pattern in the sections thereof to either side in the thickness direction of the moveable rubber plate installation zone.

Additionally, the positioning projection 100 that is shown in the preceding second embodiment is merely one example of the constraining plate positioning portion and the moveable plate positioning portion, and the specific construction of these positioning portions should not be construed as limited to the descriptions taught in the above embodiment.

As a specific example, when providing the positioning portion having a shape of projection, the positioning portion need not necessarily to be a radial pattern of a cross configuration extending from the center in four directions in plan view. The positioning portion may alternatively have a construction of combination of ribs so as to be a radial pattern extending in three or less diametrical directions including a straight line which extends from the center towards either side; or a radial pattern extending from the center in five or more diametrical directions. Furthermore, the positioning portion need not necessarily to be a construction of combination of ribs extending radially, but may alternatively employ, for example, a construction of pillar configuration having a polygonal, semi-circular, or other shape in its transverse cross section which juts out towards either thickness direction. Moreover, where the construction of combination of ribs is employed, each rib is not necessarily fashioned so as to extend radially in the diametrical direction.

Additionally, it will suffice for the moveable plate positioning portion to be defined utilizing the constraining plate positioning portion, and it is not essential to define the moveable plate positioning portion by the constraining plate positioning portion only. For example, it would also be acceptable to define the moveable plate positioning portion by means of covering the surface of the constraining plate positioning portion with a rubber layer that has been integrally formed with the moveable rubber plate.

Furthermore, it is not necessary for the positioning portion to be disposed at the center of the constraining plate or the moveable rubber plate, and could instead be disposed at a partial location along the circumference in the outer circumferential portion thereof. The positioning portion is not limited to one in number, and may be provided in plural number. Moreover, the positioning portion is not necessarily a projection or a rib, but may alternatively be, for example, defined by a recess. There is no need for the positioning portion to be provided to two sides of the constraining plate, and could instead be fashioned utilizing, for example, a projection jutting out to only one side of the constraining plate or a recess opening onto only one side of the constraining plate.

The present invention is not limited to application in engine mounts only, and would be adaptable to implementation in automotive suspension mounts or body mounts, for example. Further, the fluid filled type vibration damping device according to the present invention is not limited to automotive applications, and may be implemented for example as a vehicle-use fluid filled type vibration damping device for train cars, or as a fluid filled type vibration damping device for any of various other applications.

## Claims

1. A fluid filled type vibration damping device (10, 92) including a first mounting member (12) and a second mounting member (14) linked by a main rubber elastic body (16); a pressure-receiving chamber (60) that is situated to one side of a partition member (44) supported by the second mounting member (14) and whose wall is partially defined by the main rubber elastic body (16), and an equilibrium chamber (62) situated to the other side of the partition member (44) and whose wall is partially defined by a flexible film (34), the pressure-receiving chamber (60) and the equilibrium chamber (62) being filled with a non-compressible fluid; and an orifice passage (68) through which the pressure-receiving chamber (60) and the equilibrium chamber (62) communicate with one another, the fluid filled type vibration damping device (10, 92) further comprising; a moveable rubber plate (72, 96) is installed on the partition member (44); the pressure of the pressure-receiving chamber (60) is directed onto one face of the moveable rubber plate (72, 96) through a pressure-receiving chamber-side opening (88) that is formed in the partition member (44), while the pressure of the equilibrium chamber (62) is directed onto the other face of the moveable rubber plate (72, 96) through an equilibrium chamber-side opening (90) that is formed in the partition member (44) so as to constitute a hydraulic pressure absorbing mechanism for absorbing pressure fluctuations of the pressure-receiving chamber (60) through displacement of the moveable rubber plate (72, 96) in the thickness direction thereof based on a pressure differential between the pressure-receiving chamber (60) and the equilibrium chamber (62); a constraining plate (74, 98) larger in size than the opening area of the pressure-receiving chamber-side opening (88) and of the equilibrium chamber-side opening (90) is affixed to the moveable rubber plate (72, 96), **characterized in that**: the constraining plate (74, 98) has a plurality of penetrating windows (84) formed in a diametrical medial section such that the penetrating windows (84) are spaced apart from one another at equidistant intervals in a circumferential direction and are closed off by the moveable rubber plate (72, 96); and a slit (86) is formed in the moveable rubber plate (72, 96) in the section thereof that closes off each penetrating window (84) for constituting a short circuiting mechanism such that the slit (86) opens up through elastic deformation of the moveable rubber plate (72, 96) in the section thereof where the slit (86) has been formed, short circuiting the pressure-receiving chamber (60) and the equilibrium chamber (62).

2. The fluid filled type vibration damping device (10, 92) according to claim 1, wherein the outer peripheral edge part of the moveable rubber plate (72, 96) has a large diameter so as to extend to the outer peripheral side beyond the constraining plate (74, 98); and the outer peripheral edge part of the moveable rubber plate (72, 96) that extends to the outer peripheral side beyond the constraining plate (74, 98) has a corrugated shape extending in the circumferential direction.

3. The fluid filled type vibration damping device (10) according to claim 1 or 2, wherein a peripheral elastic projection (82) that extends in the circumferential direction around the slit (86) formation zone is formed jutting out to at least one side in the thickness direction.

4. The fluid filled type vibration damping device (10, 92) according to any one of claims 1-3, wherein a cushioning projection that juts out to either side in the thickness direction is formed in the moveable rubber plate (72, 96), and the moveable rubber plate (72, 96) comes into contact in the thickness direction with the partition member (44) via the intervening cushioning projection.

5. The fluid filled type vibration damping device (10, 92) according to any one of claims 1-4, wherein the pressure-receiving chamber-side opening (88) of circular hole shape and the equilibrium chamber-side opening (90) of circular hole shape are formed in the partition member (44); the moveable rubber plate (72, 96) is of circular plate shape larger in diameter than the pressure-receiving chamber-side opening (88) and the equilibrium chamber-side opening (90); the constraining plate (74, 98) has circular plate shape larger in diameter than the pressure-receiving chamber-side opening (88) and the equilibrium chamber-side opening (90) and is anchored in the moveable rubber plate (72, 96); and outer peripheral contact ribs (76) that jut out to either side in the thickness direction and extend in the circumferential direction are formed in the outer peripheral portion of the moveable rubber plate (72, 96).

6. The fluid filled type vibration damping device (10, 92) according to claim 5, wherein the moveable rubber plate (72, 96) is larger in diameter than the constraining plate (74, 98) and the outer peripheral edge part of the moveable rubber plate (72, 96) extends peripherally outward beyond the constraining plate (74, 98); and the outer peripheral contact ribs (76) are formed on the moveable rubber plate (72, 96) at a location thereof away to the outer peripheral side from the constraining plate (74, 98).

7. The fluid filled type vibration damping device (10, 92) according to any one of claims 1-6, wherein the moveable rubber plate (72, 96) has the one slit (86) respectively in each section thereof that closes off the each penetrating window (84).

8. The fluid filled type vibration damping device (10, 92) according to any one of claims 1-7, wherein ends of the slit (86) extend towards a rim of the each penetrating window (84).

9. The fluid filled type vibration damping device (92) according to any one of claims 1-8, wherein the moveable rubber plate (96) includes at least one contacting projection (97) projecting out from the outer circumferential face thereof.

10. The fluid filled type vibration damping device (92) according to any one of claims 1-9, wherein the constraining plate (98) includes at a diametrical center section at least one constraining plate positioning portion (100) which specifies circumferential and axis-perpendicular positions of the constraining plate (98); and the constraining plate positioning portion (100) is used as at least one moveable plate positioning portion which specifies circumferential and axis-perpendicular positions of the moveable rubber plate (96) in the moveable rubber plate (96).

11. The fluid filled type vibration damping device (92) according to claim 10, wherein the constraining plate positioning portion (100) comprises a projection (100) which juts out in the thickness direction of the constraining plate (98).

12. The fluid filled type vibration damping device (92) according to claim 11, wherein the projection (100) includes a plurality of ribs extending radially.

## Patentansprüche

1. Vibrationsdämpfungsvorrichtung fluidgefüllten Typs (10, 92), umfassend ein erstes Montageelement (12) und ein zweites Montageelement (14), die mit einem elastischen Gummigrundkörper (16) verbunden sind; eine Druckaufnahmekammer (60), die zu einer Seite eines Unterteilungselements (44) angeordnet ist, die durch das zweite Montageelement (14) gestützt wird, und deren Wand teilweise durch den elastischen Gummigrundkörper (16) definiert werden; und eine Ausgleichskammer (62), die sich an der anderen Seite des Unterteilungselements (44) befindet und deren Wand teilweise durch einen flexiblen Film (34) definiert ist, wobei die Druckaufnahmekammer (60) und die Ausgleichskammer (62) mit einem nichtkomprimierbaren Fluid gefüllt sind; und einen Öffnungsdurchgang (68), durch den die Druckaufnahmekammer (60) und die Ausgleichskammer (62) miteinander kommunizieren, wobei die Vibrationsdämpfungsvorrichtung fluidgefüllten Typs (10, 92) ferner umfassend;
eine bewegbare Gummiplatte (72, 96), die an dem Unterteilungselement (44) angebracht ist; wobei der Druck der Druckaufnahmekammer (60) durch eine Druckaufnahmekammer-Seitenöffnung (88), die in dem Unterteilungselement (44) ausgebildet ist, auf eine Fläche der bewegbaren Gummiplatte (72, 96) gerichtet ist, während der Druck der Ausgleichskammer (62) durch eine Ausgleichskammer-Seitenöffnung (90), die in dem Unterteilungselement (44) ausgebildet ist, auf die andere Fläche der bewegbaren Gummiplatte (72, 96) gerichtet ist, so dass ein hydraulischer Druckabsorbierungsmechanismus zum Absorbieren von Druckschwankungen der Druckaufnahmekammer (60) durch Verdrängung der bewegbaren Gummiplatte (72, 96) in deren Dickenrichtung basierend auf einem Druckunterschied zwischen der Druckaufnahmekammer (60) und der Ausgleichskammer (62) ausgebildet wird; eine Beschränkungsplatte (74, 98) von größerer Größe als die Öffnungsfläche der Druckaufnahmekammer-Seitenöffnung (88) und der Ausgleichskammerseitenöffnung (90) ist an der bewegbaren Gummiplatte (72, 96) befestigt, **dadurch gekennzeichnet, dass** die Beschränkungsplatte (74, 98) eine Mehrzahl durchgehender Fenster (84) aufweist, die in einem diametral mittleren Bereich ausgebildet sind, so dass die durchgehenden Fenster (84) voneinander in abstandsgleichen Intervallen in einer Umfangsrichtung beanstandet und durch die bewegbare Gummiplatte (72, 96) verschlossen sind; und, dass ein Spalt (86) in der bewegbaren Gummiplatte (72, 96) in dem Bereich derselben ausgebildet ist, der jedes durchgehende Fenster (84) verschließt, um einen Kurzschlussmechanismus derart auszubilden, daß der Spalt (86) sich durch elastische Deformation der bewegbaren Gummiplatte (72, 96) in dem Bereich derselben, in dem der Spalt (86) gebildet wurde, öffnet, wodurch die Druckaufnahmekammer (60) und die Ausgleichskammer (62) kurzgeschlossen werden.

2. Vibrationsdämpfungsvorrichtung fluidgefüllten Typs (10, 92) nach Anspruch 1, wobei der äußere Umfangskantenbereich der bewegbaren Gummiplatte (72, 96) einen größeren Durchmesser aufweist, sodass er sich zur äußeren Umfangsseite über die Beschränkungsplatte (74, 98) hinaus fortsetzt; und der äußere Umfangskantenbereich der bewegbaren Gummiplatte (72, 96), der sich zur äußeren Umfangsseite über die Beschränkungsplatte (74, 98) hinaus fortsetzt, eine gewellte Gestalt aufweist, die sich in der Umfangsrichtung erstreckt.

3. Vibrationsdämpfungsvorrichtung fluidgefüllten Typs (10, 92) nach Anspruch 1 oder 2, wobei ein peripherer elastischer Vorsprung (82), der sich in der Umfangsrichtung um die Bildungszone des Spalts (86) erstreckt, ausgebildet ist, der zu mindestens einer Seite in Dickenrichtung herausragt.

4. Vibrationsdämpfungsvorrichtung fluidgefüllten Typs (10, 92) nach einem der Ansprüche 1 bis 3, wobei ein Dämpfungsvorsprung, der zu beiden Seiten in der Dickenrichtung herausragt, in der bewegbaren Gummiplatte (72, 96) ausgebildet ist, und die bewegbare Gummiplatte (72, 96) in der Dickenrichtung über den dazwischentretenden Dämpfungsvorsprung mit dem Unterteilungselement (44) in Kontakt kommt.

5. Vibrationsdämpfungsvorrichtung fluidgefüllten Typs (10, 92) nach einem der Ansprüche 1 bis 4, wobei die Druckaufnahmekammer-Seitenöffnung (88) von kreisförmiger Lochgestalt und die Ausgleichskammer-Seitenöffnung (90) von kreisförmiger Lochgestalt in dem Unterteilungselement (44) ausgebildet sind; die bewegbare Gummiplatte (72, 96) eine runde Plattengestalt von größerem Durchmesser als die Druckaufnahmekammer-Seitenöffnung (88) und die Ausgleichskammer-Seitenöffnung (90) aufweist; die Beschränkungsplatte (74, 98) eine runde Plattengestalt von größerem Durchmesser als die Druckaufnahmekammer-Seitenöffnung (88) und die Ausgleichkammer-Seitenöffnung (90) aufweist und in der bewegbaren Gummiplatte (72, 96) verankert ist; und äußere Umfangskontaktrippen (76), die zu beiden Seiten in der Dickenrichtung herausragen und sich in der Umfangsrichtung erstrecken, im äußeren Umfangsbereich der bewegbaren Gummiplatte (72, 96) ausgebildet sind.

6. Vibrationsdämpfungsvorrichtung fluidgefüllten Typs (10, 92) nach Anspruch 5, wobei die bewegbare Gummiplatte (72, 96) einen größeren Durchmesser aufweist als die Beschränkungsplatte (74, 98) und sich der äußere Umfangskantenbereich der bewegbaren Gummiplatte (72, 96) peripher auswärts über die Beschränkungsplatte (74, 98) hinaus fortsetzt; und die äußeren Umfangskontaktrippen (76) auf der bewegbaren Gummiplatte (72, 96) an einer Stelle derselben weg zur äußeren Umfangsseite von der Beschränkungsplatte (74, 98) auswärts gebildet sind.

7. Vibrationsdämpfungsvorrichtung fluidgefüllten Typs (10, 92) nach einem der Ansprüche 1 bis 6, wobei die bewegbare Gummiplatte (72, 96) jeweils den einen Spalt (86) in jedem Bereich derselben aufweist, der jedes der durchgehenden Fenster (84) verschließt.

8. Vibrationsdämpfungsvorrichtung fluidgefüllten Typs (10, 92) nach einem der Ansprüche 1 bis 7, wobei die Enden des Spaltes (86) sich bis zu einem Rand eines jeden der durchgehenden Fenster (84) erstrecken.

9. Vibrationsdämpfungsvorrichtung fluidgefüllten Typs (10, 92) nach einem der Ansprüche 1 bis 8, wobei die bewegbare Gummiplatte (96) mindestens einen kontaktierenden Vorsprung (97) umfasst, der von der äußeren Umfangsfläche derselben herausragt.

10. Vibrationsdämpfungsvorrichtung fluidgefüllten Typs (10, 92) nach einem der Ansprüche 1 bis 9, wobei die Beschränkungsplatte (98) an einem diametralen Zentralbereich mindestens einen Beschränkungsplatten-Positionierungsbereich (100) umfasst, der die umfangs- und achsensenkrechten Positionen der Beschränkungsplatte (98) vorgibt; und der Beschränkungsplatten-Positionierungsbereich (100) als mindestens ein bewegbarer Beschränkungsplatten-Positionierungsbereich verwendet wird, der die umfangs- und achsensenkrechten Positionen der bewegbaren Gummiplatte (96) in der bewegbaren Gummiplatte (96) bestimmt.

11. Vibrationsdämpfungsvorrichtung fluidgefüllten Typs (10, 92) nach Anspruch 10, wobei der Beschränkungsplatten-Positionierungsbereich (100) einen Vorsprung (100) umfasst, der in der Dickenrichtung der Beschränkungsplatte (98) herausragt.

12. Vibrationsdämpfungsvorrichtung fluidgefüllten Typs (10, 92) nach Anspruch 11, wobei der Vorsprung (100) eine Mehrzahl von Rippen umfasst, die sich radial erstrecken.

## Revendications

1. Dispositif d'amortissement de vibration de type rempli de fluide (10, 92) comprenant un premier élément de montage (12) et un second élément de montage (14) reliés par un corps élastique en caoutchouc principal (16) ; une chambre de réception de pression (60) qui est située sur un côté d'un élément de séparation (44) supporté par le second élément de montage (14) et dont la paroi est partiellement définie par le corps élastique en caoutchouc principal (16), et une chambre d'équilibre (62) située de l'autre côté de l'élément de séparation (44) et dont la paroi est partiellement définie par un film flexible (34), la chambre de réception de pression (60) et la chambre d'équilibre (62) étant remplis avec un fluide non compressible ; et un passage d'orifice (68) à travers lequel la chambre de réception de pression (60) et la chambre d'équilibre (62) communiquent entre elles, le dispositif d'amortissement de vibration de type rempli de fluide (10, 92) comprenant en outre :
une plaque de caoutchouc mobile (72, 96) est installée sur l'élément de séparation (44) ; la pression de la chambre de réception de pression (60) est dirigée sur une face de la plaque en caoutchouc mobile (72, 96) par une ouverture (88) du côté de la chambre de réception de pression qui est formée dans l'élément de séparation (44), alors que la pression de la chambre d'équilibre (62) est dirigée sur l'autre face de la plaque en caoutchouc mobile (72, 96) par une ouverture (90) du côté de la chambre d'équilibre qui est formée dans l'élément de séparation (44) afin de constituer un mécanisme d'absorption de pression hydraulique pour absorber les fluctuations de pression de la chambre de réception de pression (60) par le déplacement de la plaque en caoutchouc mobile (72, 96) dans le sens de son épaisseur en fonction d'un différentiel de pression entre la chambre de réception de pression (60) et la chambre d'équilibre (62) ; une plaque de contrainte (74, 98) plus grande, du point de vue de la taille, que la zone d'ouverture de l'ouverture (88) du côté de la chambre de réception de pression et de l'ouverture (90) du côté de la chambre d'équilibre, est fixée sur la plaque en caoutchouc mobile (72, 96), **caractérisé en ce que** la plaque de contrainte (74, 98) a une pluralité de fenêtres de pénétration (84) formées dans une section médiane diamétrale de sorte que les fenêtres de pénétration (84) sont éloignées les unes des autres à intervalles équidistants dans une direction circonférentielle et fermées par la plaque en caoutchouc mobile (72, 96) ; et une fente (86) est formée dans la plaque en caoutchouc mobile (72, 96) dans sa section qui ferme chaque fenêtre de pénétration (84) pour constituer un mécanisme de court-circuit, de sorte que la fente (86) s'ouvre par déformation élastique de la plaque en caoutchouc mobile (72, 96) dans sa section où la fente (86) a été formée, court-circuitant la chambre de réception de pression (60) et la chambre d'équilibre (62).

2. Dispositif d'amortissement de vibration de type rempli de fluide (10, 92) selon la revendication 1, dans lequel la partie de bord périphérique externe de la plaque en caoutchouc mobile (72, 96) a un grand diamètre afin de s'étendre vers le côté périphérique externe au-delà de la plaque de contrainte (74, 98) ; et la partie de bord périphérique externe de la plaque en caoutchouc mobile (72, 96) qui s'étend vers le côté périphérique externe au-delà de la plaque de contrainte (74, 98) a une forme ondulée s'étendant dans la direction circonférentielle.

3. Dispositif d'amortissement de vibration de type rempli de fluide (10) selon la revendication 1 ou 2, dans lequel une saillie élastique périphérique (82) qui s'étend dans la direction circonférentielle autour de la zone de formation, de fente (86), est formée en faisant saillie au moins d'un côté dans le sens de l'épaisseur.

4. Dispositif d'amortissement de vibration de type rempli de fluide (10, 92) selon l'une quelconque des revendications 1 à 3, dans lequel une saillie d'amortissement qui fait saillie de chaque côté dans le sens de l'épaisseur, est formée dans la plaque en caoutchouc mobile (72, 96), et la plaque en caoutchouc mobile (72, 96) vient en contact, dans le sens de l'épaisseur, avec l'élément de séparation (44) via la saillie d'amortissement intermédiaire.

5. Dispositif d'amortissement de vibration de type rempli de fluide (10, 92) selon l'une quelconque des revendications 1 à 4, dans lequel l'ouverture (88) du côté de la chambre de réception de pression ayant une forme de trou circulaire et l'ouverture (90) du côté de la chambre d'équilibre ayant une forme de trou circulaire sont formées dans l'élément de séparation (44) ; la plaque en caoutchouc mobile (72, 96) a une forme de plaque circulaire supérieure du point du vue du diamètre, à l'ouverture (88) du côté de la chambre de réception de pression et l'ouverture (90) du côté de la chambre d'équilibre ; la plaque de contrainte (74, 98) a une forme de plaque circulaire supérieure du point du vue du diamètre, à l'ouverture (88) du côté de la chambre de réception de pression et l'ouverture (90) du côté de la chambre d'équilibre et est ancrée dans la plaque en caoutchouc mobile (72, 96) ; et des nervures de contact périphériques externes (76) qui font saillie de chaque côté dans le sens de l'épaisseur et s'étendent dans la direction circonférentielle, sont formées dans la partie périphérique externe de la plaque en caoutchouc mobile (72, 96).

6. Dispositif d'amortissement de vibration de type rempli de fluide (10, 92) selon la revendication 5, dans lequel la plaque en caoutchouc mobile (72, 96) est supérieure du point de vue du diamètre à la plaque de contrainte (74, 98) et la partie de bord périphérique externe de la plaque en caoutchouc mobile (72, 96) s'étend de manière périphérique vers l'extérieur au-delà de la plaque de contrainte (74, 98) ; et les nervures de contact périphériques externes (76) sont formées sur la plaque en caoutchouc mobile (72, 96) à un emplacement à distance du côté périphérique externe par rapport à la plaque de contrainte (74, 98).

7. Dispositif d'amortissement de vibration de type rempli de fluide (10, 92) selon l'une quelconque des revendications 1 à 6, dans lequel la plaque en caoutchouc mobile (72, 96) a la une fente (86) respectivement dans chacune de ses sections qui ferme chaque fenêtre de pénétration (84).

8. Dispositif d'amortissement de vibration de type rempli de fluide (10, 92) selon l'une quelconque des revendications 1 à 7, dans lequel des extrémités de la fente (86) s'étendent vers un rebord de chaque fenêtre de pénétration (84).

9. Dispositif d'amortissement de vibration de type rempli de fluide (92) selon l'une quelconque des revendications 1 à 8, dans lequel la plaque en caoutchouc mobile (96) comprend au moins une saillie de contact (97) faisant saillie de sa face circonférentielle externe.

10. Dispositif d'amortissement de vibration de type rempli de fluide (92) selon l'une quelconque des revendications 1 à 9, dans lequel la plaque de contrainte (98) comprend une section centrale diamétrale, au moins une partie de positionnement de plaque de contrainte (100) qui spécifie des positions circonférentielle et perpendiculaire à l'axe de la plaque de contrainte (98) ; et la partie de positionnement de plaque de contrainte (100) est utilisée en tant qu'au moins une partie de positionnement de plaque mobile qui spécifie des positions circonférentielle et perpendiculaire à l'axe de la plaque en caoutchouc mobile (96) dans la plaque en caoutchouc mobile (96).

11. Dispositif d'amortissement de vibration de type rempli de fluide (92) selon la revendication 10, dans lequel la partie de positionnement de plaque de contrainte (100) comprend une saillie (100) qui fait saillie, dans le sens de l'épaisseur, de la plaque de contrainte (98).

12. Dispositif d'amortissement de vibration de type rempli de fluide (92) selon la revendication 11, dans lequel la saillie (100) comprend une pluralité des nervures s'étendant de manière radiale.
